# EUROPÄISCHE PATENTSCHRIFT

(11) **EP 2 899 428 B1**
(45) Veröffentlichungstag und Bekanntmachung des Hinweises auf die Patenterteilung: **30.10.2019**
(21) Anmeldenummer: 14166944.0
(22) Anmeldetag: 05.05.2014
(51) Int. Cl.: F16H 3/64, F16H 3/66

(54) **Getriebe für ein Kraftfahrzeug**
Transmission for a motor vehicle
Boîte de vitesses d'un véhicule automobile

(30) Priorität: 06.06.2013 DE 102013210493
(43) Veröffentlichungstag der Anmeldung: 29.07.2015
(73) Patentinhaber: ZF Friedrichshafen AG, 88046 Friedrichshafen (DE)
(72) Erfinder: Kaltenbach, Johannes, 88048 Friedrichshafen (DE)

(56) Entgegenhaltungen:
- EP-A1- 0 618 382
- WO-A1-2007/147800

## Beschreibung

Die Erfindung betrifft ein Getriebe, insbesondere ein Mehrstufengetriebe für ein Kraftfahrzeug, umfassend ein Gehäuse, eine Antriebswelle, eine Abtriebswelle, zumindest zwei Planetenradsätze, wobei die Planetenradsätze jeweils ein Sonnenrad, zumindest einen Planeten, einen Planetenträger und ein Hohlrad umfassen, sowie mehrere Schaltelemente.

Aus der DE 10 2013 202 045 ist ein Gruppengetriebe eines Kraftfahrzeugs bekannt. Das Gruppengetriebe umfasst ein mehrstufiges Hauptgetriebe und eine mit dem Hauptgetriebe antriebstechnisch nachgeordnete Bereichsgruppe auf. Die Bereichsgruppe ist dabei in Planetenbauweise ausgeführt und umfasst zwei miteinander gekoppelte Planetenradsätze mit jeweils einem Sonnenrad, mehreren Planetenräder tragende Planetenträger und ein Hohlrad. Die beiden Planetenradsätze der Bereichsgruppe sind koaxial und axial gestaffelt zueinander angeordnet, wobei der erste Planetenradsatz axial zwischen dem Hauptgetriebe und dem zweiten Planetenradsatz angeordnet ist. Das Sonnenrad des ersten Planetenradsatzes ist drehfest mit der Hauptwelle des Hauptgetriebes verbunden und bildet somit das Eingangselement der Bereichsgruppe. Der Planetenträger des ersten Planetenradsatzes ist drehfest mit dem Hohlrad des zweiten Planetenradsatzes verbunden. Das Hohlrad des ersten Planetenradsatzes ist drehfest mit dem Sonnenrad des zweiten Planetenradsatzes verbunden. Der Planetenträger des zweiten Planetenradsatzes ist drehfest mit der Ausgangswelle verbunden und bildet somit das Ausgangselement der Bereichsgruppe.

Des Weiteren ist in der DE 10 2004 014 082 A1 ein Doppelkupplungsgetriebe in Planetenbauweise offenbart. Das Doppelkupplungsgetriebe weist dabei vier Planetenradsätze, zwei reibschlüssige Schaltelemente und mehrere formschlüssige Schaltelemente auf. Die reibschlüssigen Schaltelemente sind zum Zuschalten verschiedener Leistungspfade in einen Kraftfluss des Planetengetriebes vorgesehen. Die formschlüssigen Schaltelemente sind wiederum zum Einstellen verschiedener Übersetzungsstufen in den Leistungspfaden des Planetengetriebes vorgesehen. Des Weiteren sind die reibschlüssigen Schaltelemente sowie die formschlüssigen Schaltelemente derart zwischen den Wellen der Planetenradsätze, einem Gehäuse bzw. gehäusefesten Bauteil des Planetengetriebes sowie einer Getriebeeingangswelle und einer Getriebeausgangswelle angeordnet, dass Gangstufenwechsel über die reibschlüssigen Schaltelemente zugkraftunterbrechungsfrei durchführbar sind.

Nachteilig dabei ist hierbei unter anderem, dass aufgrund der innenliegenden Schaltelemente ein Topfdurchgriff für die Betätigung notwendig ist. Des Weiteren sind bei dem beschriebenen Doppelstufengetriebe nur sechs Gänge vorhanden.

Im Dokument EP 0 618 382 A1 wird eine Hilfsgetriebegruppe für ein Verbundgetriebe und insbesondere eine verbesserte Hilfsgetriebegruppe mit einem Planetenzahnradsatz zum Festlegen wählbarer Drehmomentübertragungswege zwischen einer Eingangswelle und einer Ausgangswelle der Hilfsgruppe offenbart. Die Fig.4 dieses Dokuments offenbart, nach Auffassung der Prüfungsabteilung des europäischen Patentamts, ein Getriebe, welches unter den Wortlaut des Oberbegriffs des Anspruchs 1 fällt.

Eine Aufgabe der vorliegenden Erfindung ist es daher, ein Getriebe für ein Kraftfahrzeug zur Verfügung zu stellen, welches eine gute Zugänglichkeit von Schaltelementen ermöglicht, eine hohe Anzahl von Gängen aufweist und kompakt baut. Darüber hinaus ist es eine Aufgabe der vorliegenden Erfindung, ein alternatives Getriebe anzugeben.

Die vorliegende Erfindung löst die Aufgaben mit einem Getriebe gemäß einem der Ansprüche 1-12.

Die Erfindung löst die Aufgaben ebenfalls bei einem Kraftfahrzeug, insbesondere bei einem Personen- oder Lastkraftwagen, mit einem Getriebe gemäß einem der Ansprüche 1 bis 12.

Vorteile hierbei sind unter anderem, dass die Schaltelemente leicht zugänglich sind und beispielsweise für Schaltgabeln von außen zugänglich sind. Es ist somit kein Topfdurchgriff zur Betätigung der Schaltelemente notwendig. Weitere Vorteile sind eine kompakte Bauweise, kleine Trägheitsmassen und eine Leistungsdichte durch die Aufteilung auf mehrere Planetenräder. Darüber hinaus ist mit dem Getriebe eine ausreichend hohe Anzahl von Gängen darstellbar.

Über die Antriebswelle wird besonders bevorzugt ein Drehmoment bzw. eine Rotationsbewegung einer Antriebswelle, beispielsweise eines Verbrennungsmotors, in das Getriebe eingeleitet.

Unter einer Welle ist nachfolgend nicht ausschließlich ein beispielsweise zylindrisches, drehbar gelagertes Maschinenelement zur Übertragung von Drehmomenten zu verstehen, sondern vielmehr sind hierunter auch allgemeine Verbindungselemente zu verstehen, die einzelne Bauteile oder Elemente miteinander verbinden, insbesondere Verbindungselemente, die mehrere Elemente drehfest miteinander verbinden.

Zwei Elemente werden insbesondere als miteinander verbunden bezeichnet, wenn zwischen den Elementen eine feste, insbesondere drehfeste Verbindung, besteht. Insbesondere drehen solche verbundenen Elemente mit der gleichen Drehzahl.

Zwei Elemente werden im Weiteren als verbindbar bezeichnet, wenn zwischen diesen Elementen eine lösbare Verbindung besteht. Insbesondere drehen solche Elemente mit der gleichen Drehzahl, wenn die Verbindung besteht.

Die verschiedenen Bauteile und Elemente der genannten Erfindung können dabei über eine Welle bzw. ein Verbindungselement, aber auch direkt, beispielsweise mittels einer Schweiß-, Press- oder einer sonstigen Verbindung miteinander verbunden sein.

Unter einer Kupplung ist vorzugsweise in der Beschreibung, insbesondere in den Ansprüchen, ein Schaltelement zu verstehen, welches, je nach Betätigungszustand, eine Relativbewegung zwischen zwei Bauteilen zulässt oder eine Verbindung zur Übertragung eines Drehmoments darstellt. Unter einer Relativbewegung ist beispielsweise eine Rotation zweier Bauteile zu verstehen, wobei die Drehzahl des ersten Bauteils und die Drehzahl des zweiten Bauteils voneinander abweichen. Darüber hinaus ist auch die Rotation nur eines der beiden Bauteile denkbar, während das andere Bauteil still steht oder in entgegengesetzter Richtung rotiert.

Im Folgenden ist unter einer nicht betätigten Kupplung eine geöffnete Kupplung zu verstehen. Dies bedeutet, dass eine Relativbewegung zwischen den beiden Bauteilen möglich ist. Bei betätigter bzw. geschlossener Kupplung rotieren die beiden Bauteile dementsprechend mit gleicher Drehzahl in dieselbe Richtung.

Unter einer Bremse ist vorzugsweise in der Beschreibung, insbesondere in den Ansprüchen, ein Schaltelement zu verstehen, welches auf einer Seite mit einem feststehenden Element, beispielsweise einem Gehäuse, und auf einer anderen Seite mit einem rotierbaren Element verbunden ist.

Im Folgenden ist unter einer nicht betätigten Bremse eine geöffnete Bremse zu verstehen. Dies bedeutet, dass das rotierende Bauteil frei rotierbar ist, d.h., die Bremse bevorzugt keinen Einfluss auf die Drehzahl des rotierenden Bauteils nimmt. Bei betätigter bzw. geschlossener Bremse erfolgt eine Reduzierung der Drehzahl des rotierbaren Bauteils bis hin zum Stillstand, d.h., dass eine feste Verbindung zwischen rotierbarem Element und feststehendem Element herstellbar ist. Element und Bauteil sind in diesem Zusammenhang gleichzusetzen. Grundsätzlich ist auch eine Verwendung von Schaltelementen möglich, die im nicht betätigten Zustand geschlossen und im betätigten Zustand geöffnet sind. Dementsprechend sind die Zuordnungen zwischen Funktion und Schaltzustand der oben beschriebenen Schaltzustände in umgekehrter Weise zu verstehen. Bei den nachfolgenden Ausführungsbeispielen anhand der Figuren, wird zunächst eine Anordnung zugrunde gelegt, in der ein betätigtes Schaltelement geschlossen und ein nicht betätigtes Schaltelement geöffnet ist.

Ein Planetenradsatz umfasst ein Sonnenrad, ein Planetenträger respektive Steg und ein Hohlrad. An dem Planetenträger respektive Steg drehbar gelagert sind Planetenräder oder Planeten, welche mit der Verzahnung des Sonnenrades und/oder der Verzahnung des Hohlrades kämmen.

Nachfolgend beschreibt ein Minus-Planetenradsatz einen Planetenradsatz mit einem Planetenträger, an dem die Planetenräder drehbar gelagert sind, mit einem Sonnenrad und mit einem Hohlrad, wobei die Verzahnung zumindest eines der Planetenräder sowohl mit der Verzahnung des Sonnenrades als auch mit der Verzahnung des Hohlrades kämmt, wodurch das Hohlrad und das Sonnenrad in entgegengesetzte Drehrichtungen rotieren, wenn das Sonnenrad bei feststehendem Planetenträger rotiert.

Ein Plus-Planetenradsatz unterscheidet sich zu dem gerade beschriebenen Minus-Planetenradsatz dahingehend, dass der Plus-Planetenradsatz innere und äußere Planetenräder aufweist, welche drehbar an den Planetenträger gelagert sind. Die Verzahnung der inneren Planetenräder kämmt dabei einerseits mit der Verzahnung des Sonnenrades und andererseits mit der Verzahnung der äußeren Planetenräder. Die Verzahnung der äußeren Planetenräder kämmt darüber hinaus mit der Verzahnung des Hohlrades. Dies hat zur Folge, dass bei feststehendem Planetenträger das Hohlrad und das Sonnenrad in die gleiche Drehrichtung rotieren.

Durch die Verwendung von Planetenradsätzen können besonders kompakte Getriebe realisiert werden, wodurch eine große Freiheit bei der Anordnung des Getriebes in dem Fahrzeug erreicht wird.

Unter den Elementen eines Planetenradsatz werden insbesondere das Sonnenrad, das Hohlrad, der Planetenträger respektive Steg und die Planetenräder respektive die Planeten des Planetenradsatz verstanden.

Besonders bevorzugt sind die Schaltelemente selektiv, also einzeln und bedarfsgerecht betätigbar, wodurch unterschiedliche Gänge durch unterschiedliche Übersetzungsverhältnisse zwischen der Antriebswelle und der Abtriebswelle realisierbar sind. Je höher die Anzahl der Gänge, desto feiner kann eine Gangabstufung bei einer großen Getriebespreizung realisiert werden und somit kann beispielsweise ein Verbrennungsmotor eines Kraftfahrzeugs in einem optimalen Drehzahlbereich und damit möglichst wirtschaftlich betrieben werden. Gleichzeitig trägt dies zu einer Erhöhung des Fahrkomforts bei, da der Verbrennungsmotor bevorzugt auf einem niedrigen Drehzahlniveau betreibbar ist. So werden beispielsweise auch Lärmemissionen reduziert, welche durch den Betrieb des Verbrennungsmotors entstehen.

Weiterhin können die Schaltelemente derart ausgebildet sein, dass für eine Änderung eines Schaltzustandes der Schaltelemente Energie, nicht jedoch für das Beibehalten des Schaltzustandes selbst benötigt wird.

Hierzu eignen sich in besonderer Weise bedarfsgerecht betätigbare Schaltelemente, wie beispielsweise elektromechanische Schaltelemente oder elektromagnetische Schaltelemente. Sie zeichnen sich, insbesondere im Vergleich zu konventionell hydraulisch betätigbaren Schaltelementen, durch einen besonders geringen und effizienten Energiebedarf aus, da sie nahezu verlustfrei betreibbar sind. Darüber hinaus kann in vorteilhafter Weise darauf verzichtet werden, permanent einen Steuerdruck für die Betätigung der beispielsweise konventionell hydraulischen Schaltelemente vorzuhalten, bzw. das jeweilige Schaltelement in geschaltetem Zustand permanent mit dem erforderlichen Hydraulikdruck zu beaufschlagen. Hierdurch können beispielsweise weitere Bauteile wie eine Hydraulikpumpe entfallen, soweit diese ausschließlich der Ansteuerung und Versorgung der konventionell hydraulisch betätigbaren Schaltelemente dienen. Erfolgt die Versorgung weiterer Bauteile mit Schmiermitteln nicht über eine separate Schmiermittelpumpe, sondern über die gleiche Hydraulikpumpe, so kann diese zumindest kleiner dimensioniert werden. Auch eventuell auftretende Undichtigkeiten an Ölübergabestellen des Hydraulikkreislaufs, insbesondere bei rotierenden Bauteilen, entfallen. Dies trägt besonders bevorzugt ebenfalls zu einer Effizienzsteigerung des Getriebes in Form eines höheren Wirkungsgrades bei.

Bei der Verwendung von bedarfsgerecht betätigbaren Schaltelementen der oben genannten Art ist es besonders vorteilhaft, wenn diese von außen gut zugänglich sind. Dies hat unter anderem den Vorteil, dass die benötigte Schaltenergie den Schaltelementen gut zugeführt werden kann. Daher sind Schaltelemente besonders gut bevorzugt so angeordnet, dass sie von außen gut zugänglich sind. Von außen gut zugänglich bedeutet im Sinne der Schaltelemente, das zwischen dem Gehäuse des Getriebes und dem Schaltelement keine weiteren Bauteile angeordnet sind, bzw. dass die Schaltelemente besonders bevorzugt an der Antriebswelle oder an der Abtriebswelle angeordnet sind.

Unter dem Begriff "Bindbarkeit" ist vorzugsweise in der Beschreibung, insbesondere in den Ansprüchen zu verstehen, dass bei unterschiedlicher geometrischer Lage die gleiche Anbindung bzw. Bindung von Schnittstellen gewährleistet ist, ohne dass sich einzelne Verbindungselemente oder Wellen kreuzen.

Unter dem Begriff "Standübersetzung" ist diejenige Übersetzung zu verstehen, die durch das Übersetzungsverhältnis zwischen Sonnenrad und Hohlrad des jeweiligen Planetenradsatz realisiert ist, wenn der Planetenträger respektive Steg feststeht.

Weitere vorteilhafte Ausführungsformen, Merkmale und Vorteile der Erfindung sind in den Unteransprüchen beschrieben.

Zweckmäßigerweise ist das vierte Schaltelement ein reibschlüssiges Schaltelement, insbesondere eine Bremse, oder ein formschlüssiges Schaltelement. Ist beispielsweise das vierte Schaltelement eine Bremse kann auf einfache Weise je nach Bedarf, dass in Wirkverbindung mit der Bremse stehende Getriebeelement mit dem Gehäuse fest verbunden werden. Ist das Schaltelement in Form eines form oder reibschlüssiges Schaltelementes angeordnet, ist eine kostengünstige bzw. zuverlässige Kopplung von Getriebeelementen mit diesem möglich.

Vorteilhafterweise ist der Steg des dritten Planetenradsatzes mit dem Steg des ersten Planetenradsatzes drehfest verbunden oder durch wenigstens ein Schaltelement mit dem Steg des ersten Planetenradsatzes verbindbar. Sind Schaltelemente zum Koppeln des Stegs eines Planetenradsatzes mit dem Steg eines anderen Planetenradsatzes angeordnet, so wird damit die Anzahl der durch das Getriebe darstellbaren Gangstufen weiter erhöht.

Zweckmäßigerweise ist eine elektrische Maschine angeordnet, die insbesondere zur Betätigung des fünften Schaltelements ausgebildet ist. Durch die elektrische Maschine kann eine elektrische Zugkraftunterstützung bereitgestellt werden. Darüber hinaus kann eine besonders zuverlässige Betätigung des fünften Schaltelementes durch die elektrische Maschine erfolgen.

Vorteilhafterweise ist das Sonnenrad des vierten Planetenradsatzes mit dem Gehäuse gehäusefest verbunden oder durch ein Schaltelement mit dem Gehäuse gehäusefest verbindbar und/oder mit einem Schaltelement mit dem Hohlrad des vierten Planetenradsatzes verbindbar oder mit dem Hohlrad des dritten Planetenradsatzes drehfest verbunden. Ein durch eine feste Verbindung des Sonnenrads eines Planentenradsatzes mit dem Gehäuse erzielbarer Vorteil ist, dass der Aufbau des Getriebes vereinfacht werden kann.

Zweckmäßigerweise ist der Steg des vierten Planetenradsatzes mit dem Steg des zweiten Planetenradsatzes drehfest verbunden oder ist mittels eines Schaltelements mit dem Steg des zweiten Planetenradsatzes verbindbar und/oder ist mittels eines Schaltelements mit dem Steg des ersten Planetenradsatzes verbindbar. Eine drehfeste Verbindung eines Stegs eines Planetenradsatzes mit einem Steg eines anderen Planetenradsatzes hat den Vorteil, dass der Aufbau des Getriebes weiter vereinfacht werden kann.

Vorteilhafterweise sind der fünfte Planetenradsatz und der sechste Planetenradsatz geschachtelt angeordnet und bilden eine Rückwärtsgang-Gruppe zum Bereitstellen zumindest eines Rückwärtsgangs, wobei die Rückwärtsgang-Gruppe am Ausgang des Getriebes angeordnet ist und wobei das Sonnenrad des fünften Planetenradsatzes mit dem Steg des zweiten Planetenradsatzes drehfest verbunden ist, und der Steg des fünften Planetenradsatzes mittels eines Schaltelements für einen Rückwärtsgang mit dem Gehäuse gehäusefest verbindbar ist und wobei das Sonnenrad des sechsten Planetenradsatzes mittels eines Schaltelements mit dem Gehäuse gehäusefest verbindbar ist und mittels eines Schaltelements mit dem Steg des fünften Planetenradsatzes verbindbar ist. Die Rückwärtsgang-Gruppe kann in einem Getriebe einfach ergänzt werden. Des Weiteren erlaubt die geschachtelte Anordnung des fünften und sechsten Planetenradsatzes, dass das Getriebe axial noch kompakter ausgeführt werden kann.

Zweckmäßigerweise ist der fünfte Planetenradsatz am Eingang des Getriebes angeordnet und das Sonnenrad des fünften Planetenradsatzes ist drehfest mit der Antriebswelle ausgebildet und der Steg des fünften Planetenradsatzes ist mittels eines Schaltelements zum Bereitstellen zumindest eines Rückwärtsgangs mit dem Gehäuse gehäusefest verbindbar oder mittels eines Schaltelements zum Bereitstellen zumindest eines Vorwärtsgangs mit der Antriebswelle verbindbar. Durch das Vorsehen des fünften Planetenradsatzes am Eingang des Getriebes kann auf einfache Weise eine Vorschaltgruppe bereitgestellt werden.

Vorteilhafterweise bilden der erste Planetenradsatz und der zweite Planetenradsatz ein erstes Teilgetriebe und der zweite Planetenradsatz bildet zusammen mit dem dritten Planetenradsatz und dem vierte Planetenradsatz ein zweites Teilgetriebe. Der erste Planetenradsatz stellt dabei eine von beiden Teilgetrieben gemeinsam genutzte Bereichsgruppe bereit, was den Bauraum des Getriebes trotz einer hohen Anzahl von darstellbaren Gängen zumindest nicht wesentlich erhöht.

Vorteilhafterweise bildet ein Vorgelege ein zweites Teilgetriebe, wobei das Vorgelege wenigstens eine Vorgelegewelle und wenigstens zwei Radebenen aufweist. Durch die beiden Radebenen des Vorgeleges kann ein doppelter Gangsprung realisiert werden.

Zweckmäßigerweise ist eine Trennkupplung als Anfahrkupplung vorgesehen, welche einen Antriebsmotor mit der Getriebewelle am Eingang des Getriebes verbindet. Die Trennkupplung kann, beispielsweise bei einer Zugkraftunterstützung durch eine elektrische Maschine, als Anfahrkupplung genutzt werden, wenn der Energiespeicher der elektrischen Maschine leer oder die elektrische Maschine zu schwach ist.

Vorteilhafterweise sind mittels mindestens neun Schaltelementen und mindestens zwei Lastschaltelementen, sowie sechs Planetenradsätzen mindestens 14 Vorwärtsgänge und mindestens sieben Rückwärtsgänge darstellbar sind. Auf diese Weise wird eine ausreichend hohe Anzahl von Vorwärtsgängen und Rückwärtsgängen zur Verfügung gestellt, was die Flexibilität des Getriebes hinsichtlich des Einsatzes in unterschiedlichen Fahrzeugen verbessert.

Weitere Vorteile der Erfindung ergeben sich aus den Zeichnungen und aus der dazugehörigen Figurenbeschreibung anhand der Zeichnungen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigen jeweils in schematischer Form
- Fig. 1a: ein Getriebe gemäß einer ersten Ausführungsform der vorliegenden Erfindung;
- Fig. 1b: ein Übersetzungsschema für ein Getriebe gemäß Fig. 1a;
- Fig. 1c: eine Schaltmatrix für ein Getriebe gemäß der Fig. 1a;
- Fig. 2a: ein Getriebe gemäß einer zweiten Ausführungsform der Erfindung;
- Fig. 2b: ein Übersetzungsschema für ein Getriebe gemäß Fig. 2a;
- Fig. 2c: eine Schaltmatrix für ein Getriebe gemäß der Fig. 2a;
- Fig. 3: ein Getriebe gemäß einer dritten Ausführungsform der vorliegenden Erfindung;
- Fig. 4: ein Getriebe gemäß noch einer vierten Ausführungsform der vorliegenden Erfindung;
- Fig. 5a: ein Getriebe gemäß einer fünften Ausführungsform der vorliegenden Erfindung;
- Fig. 5b: ein Übersetzungsschema für ein Getriebe gemäß Fig. 5a;
- Fig. 5c: eine Schaltmatrix für ein Getriebe gemäß der Fig. 5a;
- Fig. 6: ein Getriebe gemäß einer sechsten Ausführungsform der vorliegenden Erfindung;
- Fig. 7a: ein Getriebe gemäß einer siebten Ausführungsform der vorliegenden Erfindung;
- Fig. 7b: ein Übersetzungsschema für ein Getriebe gemäß Fig. 7a;
- Fig. 7c: eine Schaltmatrix für ein Getriebe gemäß der Fig. 7a;
- Fig. 8a: ein Getriebe gemäß einer achten Ausführungsform der vorliegenden Erfindung;
- Fig. 8b: ein Übersetzungsschema für ein Getriebe gemäß Fig. 8a;
- Fig. 8c: eine Schaltmatrix für ein Getriebe gemäß der Fig. 8a;Fig. 9a ein Getriebe gemäß einer neunten Ausführungsform der vorliegenden Erfindung;
- Fig. 9b: ein Übersetzungsschema für ein Getriebe gemäß Fig. 9a;
- Fig. 9c: eine Schaltmatrix für ein Getriebe gemäß der Fig. 9a;
- Fig. 10a: ein Getriebe gemäß einer zehnten Ausführungsform der vorliegenden Erfindung;
- Fig. 10b: ein Übersetzungsschema für ein Getriebe gemäß Fig. 10a;
- Fig. 10c: eine Schaltmatrix für ein Getriebe gemäß der Fig. 10a;
- Fig. 11a: ein Getriebe gemäß einer elften Ausführungsform der vorliegenden Erfindung;
- Fig. 11b: ein Übersetzungsschema für ein Getriebe gemäß Fig. 11a;
- Fig. 11c: eine Schaltmatrix für ein Getriebe gemäß der Fig. 11a;
- Fig. 12a: ein Getriebe gemäß einer zwölften Ausführungsform der vorliegenden Erfindung;
- Fig. 12b: ein Übersetzungsschema für ein Getriebe gemäß Fig. 12a;
- Fig. 12c: eine Schaltmatrix für ein Getriebe gemäß der Fig. 12a;
- Fig. 13a: ein Getriebe gemäß noch einer dreizehnten Ausführungsform der vorliegenden Erfindung;
- Fig. 13b: ein Übersetzungsschema für ein Getriebe gemäß Fig. 13a;
- Fig. 13c: eine Schaltmatrix für ein Getriebe gemäß der Fig. 13a;
- Fig. 14a: ein Getriebe gemäß einer vierzehnten Ausführungsform der vorliegenden Erfindung;
- Fig. 14b: ein Übersetzungsschema für ein Getriebe gemäß Fig. 14a;
- Fig. 14c: eine Schaltmatrix für ein Getriebe gemäß der Fig. 14a; und
- Fig. 15: ein Getriebe gemäß einer fünfzehnten Ausführungsform der vorliegenden Erfindung.

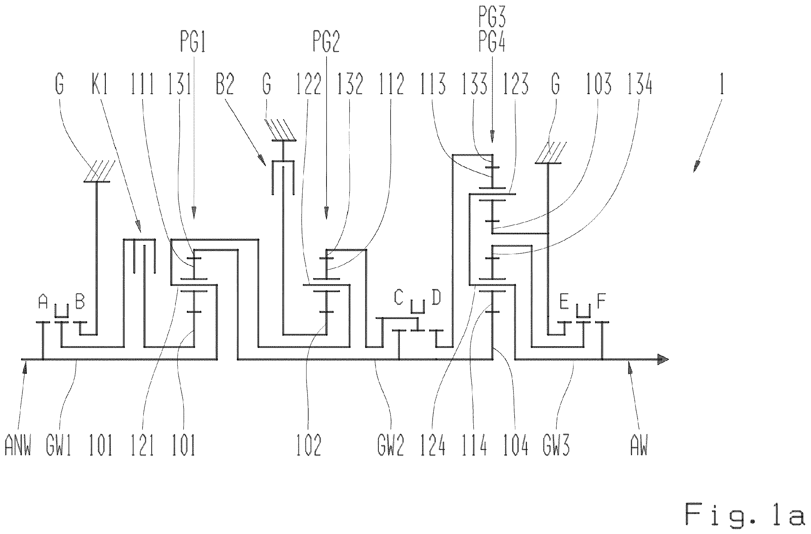

Fig. 1a zeigt ein Getriebe gemäß einer ersten Ausführungsform der vorliegenden Erfindung.

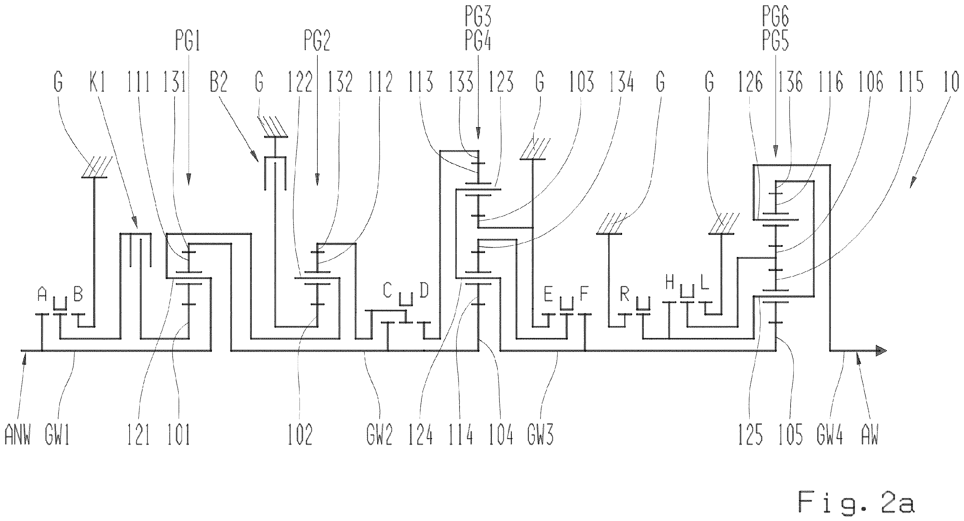

In Fig. 1a bezeichnet Bezugszeichen 1 ein Mehrstufengetriebe, wobei das Mehrstufengetriebe 1 beispielsweise in Form eines Doppelkupplungsgetriebes mit sieben Gängen umfassend zwei Overdrive-Gängen ausgebildet sein kann. Hierbei ist in Fig. 1a, sowie in den nachfolgenden Figuren 2a-15 jeweils nur eine Getriebehälfte des rotationssymmetrischen Getriebes dargestellt.

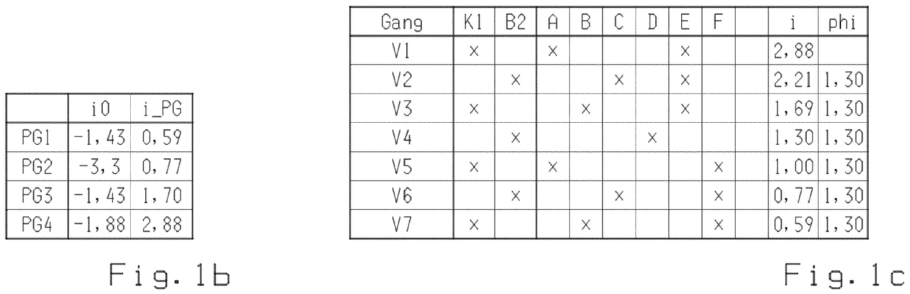

Das Getriebe 1 weist acht Schaltelemente in Form einer Kupplung K1, einer Bremse B2 und sechs Schaltelementen A, B, C, D, E und F auf sowie vier Planetenradsätze PG1, PG2, PG3, PG4. Die sechs Schaltelemente A, B, C, D, E und F bilden dabei beispielsweise drei Doppelschaltelemente A/B, C/D und E/F. Mittels der Kupplung K1 kann die Antriebsseite mit der Abtriebsseite des Getriebes 1 zur Übertragung von Kraft und Drehmoment über Wellen, Schaltelemente und/oder Planetenradsätze gekoppelt bzw. verbunden werden. Vorzugsweise sind die meisten oder besonders bevorzugt alle Schaltelemente des Getriebes 1 von außen zugänglich in einem Gehäuse G für das Getriebe 1 angeordnet, so dass sie von außen betätigt werden können, beispielsweise mittels Schaltgabeln oder dergleichen. Dies gilt für alle Ausführungsformen der Erfindung und insbesondere die in den Figuren 1-15 beschriebenen Ausführungsbeispiele.

Im Folgenden wird zunächst der allgemeine Aufbau des ersten Planetenradsatzes PG1, des zweiten Planetenradsatzes PG2, des dritten Planetenradsatzes PG3 und des vierten Planetenradsatzes PG4 beschrieben. Die Planetenradsätze PG1, PG2, PG3, PG4 weisen jeweils ein Sonnenrad 101, 102, 103, 104 auf, welches mit zumindest einem Planeten 111, 112, 113, 114 zur Übertragung von Kraft und Drehmomenten zusammenwirkt. Auf der radialen Außenseite des jeweiligen Planeten 111, 112, 113, 114 des ersten, zweiten, dritten und vierten Planetenradsatzes PG1, PG2, PG3, PG4 ist jeweils ein Hohlrad 131, 132, 133, 134 angeordnet, in das der jeweilige Planet 111, 112, 113, 114 zur Übertragung von Kraft und Drehmomenten eingreift. Die Planeten 111, 112, 113, 114 sind dabei jeweils an einen entsprechenden Planetenträger 121, 122, 123, 124 drehbar gelagert.

Bei dem ersten Planetenradsatz PG1 ist dessen Sonnenrad 101 mit der Kupplung K1 koppelbar oder verbindbar. Hierzu ist ein Doppelschaltelement A/B vorgesehen, welches die beiden Schaltelemente A und B zusammenfasst. Ist das erste Schaltelement A betätigt oder geschlossen, so verbindet es eine erste Getriebewelle GW1 mit der Kupplung K1 und, wenn zusätzlich auch die Kupplung K1 betätigt ist, entsprechend die erste Getriebewelle GW1 mit dem Sonnenrad 101. Die erste Getriebewelle GW1 bildet in Fig. 1 die Antriebswelle ANW. Ist das zweite Schaltelement B geschlossen oder betätigt, so ist die Kupplung K1 mit dem Gehäuse G verbunden und, wenn zusätzlich auch die Kupplung K1 betätigt ist, entsprechend das Gehäuse G mit dem Sonnenrad 101. Das Hohlrad 131 des ersten Planetenradsatzes PG1 ist mit einer zweiten Getriebewelle GW2 drehfest verbunden, wie auch das Sonnenrad 104 des vierten Planetenradsatzes PG4. Damit ist das Hohlrad 131 mit dem Sonnenrad 104 des vierten Planetenradsatzes PG4 drehfest verbunden. Des Weiteren ist der Planet 111 des ersten Planetenradsatzes PG1 auf einem Steg/Planetenträger 121 drehbar gelagert. Der Steg 121 des ersten Planetenradsatzes PG1 ist einerseits mit der Antriebswelle ANW und andererseits mit dem Steg 122 des zweiten Planetenradsatzes PG2 drehfest verbunden.

Der Planet 112 des zweiten Planetenradsatzes PG2 ist hierbei auf dem Steg 122 des zweiten Planetenradsatzes PG2 drehbar gelagert. Das Sonnenrad 102 des zweiten Planetenradsatzes PG2 ist über die Bremse B2 mit dem Gehäuse G drehfest verbindbar. Das Hohlrad 132 des zweiten Planetenradsatzes PG2 ist mittels des zweiten Doppelschaltelements C/D koppelbar. Das zweite Doppelschaltelement C/D fasst hierbei die zwei Schaltelemente C und D zusammen. Mittels des dritten Schaltelementes C ist das Hohlrad 132 des zweiten Planetenradsatzes PG2 mit dem Hohlrad 133 des dritten Planetenradsatzes PG3 koppelbar. Des Weiteren ist mittels des vierten Schaltelementes D das Hohlrad 132 drehfest mit der zweiten Getriebewelle GW2 und entsprechend mit dem Sonnenrad 104 des vierten Planentenradsatzes PG3 verbindbar.

Der vierte Planetenradsatz PG4 ist radial und koaxial innerhalb des dritten Planetenradsatzes PG3 angeordnet. Das Sonnenrad 103 des dritten Planetenradsatzes PG3 ist mit dem Gehäuse G verbunden und somit gehäusefest. Der Planet 113 des dritten Planetenradsatzes PG3 ist auf dem Steg 123 des dritten Planetenradsatzes PG3 drehbar gelagert und der Steg 123 des dritten Planetenradsatzes PG3 ist mit dem Steg 124 des vierten Planetenradsatz PG4 drehfest verbunden. Der Planet 114 des vierten Planetenradsatzes PG4 ist dabei drehbar auf dem Steg 124 des vierten Planetenradsatzes PG4 gelagert. Die beiden miteinander drehfest verbundenen Stege 123 und 124 des dritten und vierten Planetenradsatzes PG3 und PG4 sind wiederum drehfest mit einer dritten Getriebewelle GW3 bzw. hier in Form der Abtriebswelle AW verbunden. Das Sonnenrad 104 des vierten Planetenradsatzes PG4 ist, wie zuvor beschrieben, drehfest mit der zweiten Getriebewelle GW2 und dem entsprechend mit dem Hohlrad 131 des ersten Planetenradsatzes PG1 verbunden. Das Hohlrad 134 des vierten Planetenradsatzes PG4 ist mittels des dritten Doppelschaltelements E/F kuppelbar. Das dritte Doppelschaltelement E/F fasst hierbei die zwei Schaltelemente E und F zusammen. Mittels des fünften Schaltelementes E ist das Hohlrad 134 des vierten Planetenradsatzes PG4 mit dem Gehäuse G drehfest verbindbar. Ist dieses geschlossen, sind das Hohlrad 134 und das Sonnenrad 103 des dritten Planetenradsatzes PG3 mit dem Gehäuse G verbunden und somit gehäusefest. Mittels des sechsten Schaltelementes F ist das Hohlrad 134 des vierten Planetenradsatzes PG4 wiederum mit der Abtriebswelle AW verbindbar.

Das Getriebe, wie es in Fig. 1a gezeigt ist, weist ein erstes und zweites Teilgetriebe TG1 und TG2 auf. Das erste Teilgetriebe TG1 umfasst dabei den ersten und vierten Planetenradsatz PG1 und PG4 und das zweite Teilgetriebe TG2 den zweiten, dritten und vierten Planetenradsatz PG2, PG3 und PG4.

Das erste Teilgetriebe TG1 weist 2x2 = 4 Übersetzungen auf. Das erste Doppelschaltelement A/B schaltet dabei zwei Übersetzungen. Der Gangsprung k beträgt geometrisch z.B. 1,3.

Das zweite Schaltelement B schaltet eine Overdrive-Übersetzung k⁻², die über den ersten Planetenradsatz PG1 ermöglicht wird. Der Begriff "Overdrive" bedeutet, dass in einem sog. Overdrive-Gang die Antriebswelle ANW sich langsamer dreht als die Abtriebswelle AW. Der Antrieb erfolgt von der Antriebswelle ANW und die mit ihr drehfest verbundenen Stege 121 und 122 des ersten und zweiten Planetenradsatzes PG1 und PG2. Der Abtrieb erfolgt wiederum über das Hohlrad 131 des ersten Planetenradsatzes PG1 und das mit ihm über die zweite Getriebewelle GW2 drehfest verbundene Sonnerad 104 des vierten Planetenradsatzes PG4. Das Sonnenrad 103 des dritten Planetenradsatzes PG3 ist gehäusefest, wie zuvor beschrieben. Es liegt hier somit ein Minus-Getriebe vor. Des Weiteren ist mittels des ersten Schaltelementes A eine Direkt-Übersetzung i=1 schaltbar. Der erste Planetenradsatz PG1 ist dabei im Blockumlauf. Diese beiden Übersetzungen, welche durch das erste Schaltelement A und das zweite Schaltelement B schaltbar sind, werden durch den vierten Planetenradsatz PG4 verdoppelt. Es werden somit vier Gänge erzeugt. Der vierte Planetenradsatz PG4 stellt dabei eine von beiden Teilgetrieben TG1 und TG2 gemeinsam genutzte Bereichsgruppe dar. Hierbei erstreckt sich die Antriebswelle ANW durch das erste Teilgetriebe TG1 hindurch zu dem zweiten Teilgetriebe TG2.

Das zweite Teilgetriebe TG2 umfasst, wie zuvor beschrieben, den zweiten, dritten und vierten Planetenradsatz PG2, PG3 und PG4 und weist 1x2+1 = 3 Übersetzungen auf. Das dritte Schaltelement C schaltet für das zweite Teilgetriebe TG2 eine Overdrive-Übersetzung k⁻¹. Der Antrieb erfolgt dabei über die Antriebswelle ANW und die mit ihr drehfest verbundenen Stege 121 und 122 des ersten und zweiten Planetenradsatzes PG1, PG2. Der Abtrieb erfolgt wiederum über das Hohlrad 131 des ersten Planetenradsatzes PG1, wobei mittels des dritten Schaltelementes C das Hohlrad 132 des zweiten Planetenradsatzes PG2 mit dem Hohlrad 131 des ersten Planetenradsatzes PG1 verbindbar ist. Das Sonnenrad 103 des dritten Planetenradsatzes PG3 ist gehäusefest, wie zuvor beschrieben. Diese Overdrive-Übersetzung k⁻¹ wird über den vierten Planetenradsatz PG4 doppelt genutzt, d.h. es gilt 1x2. Das vierte Schaltelement D schaltet einen Gang mit der Übersetzung k¹ unabhängig von der Bereichsgruppe, die der vierte Planetenradsatz PG4 bildet. Dieser wird durch den zweiten und dritten Planetenradsatz PG2 und PG3 zusammen erzeugt. Dabei erzeugt der zweite Planetenradsatz PG2 die Übersetzung k⁻¹ und der dritte Planetenradsatz PG3 die Übersetzung k². Das ergibt hintereinandergeschaltet eine Übersetzung k¹. Dieser Gang wird durch den vierten Planetenradsatz PG4 doppelt genutzt. Dadurch kann der vierte Planetenradsatz PG4 mit dem dritten Doppelschaltelement E/F als Hintergrundschaltung lastfrei geschaltet werden.

Fig. 1b zeigt ein Übersetzungsschema für ein Getriebe gemäß Fig. 1a.

In Fig. 1b ist beispielhaft eine Übersetzungstabelle für Übersetzungen der vier Planetenradsätze PG1-PG4 des Getriebes gemäß Fig. 1a dargestellt. Dabei ist eine jeweilige Standgetriebeübersetzung i0 für die Planetenradsätze PG1-PG4 und eine jeweilige Übersetzung des Planetenradsatz i_PG für die Planetenradsätze PG1-PG4 angegeben.

Fig. 1c zeigt eine Schaltmatrix für ein Getriebe gemäß der Fig. 1a.

In Fig. 1c ist außerdem eine beispielhafte Schaltmatrix des Getriebes gemäß Fig. 1a gezeigt. In der in Fig. 1c gezeigten Schaltmatrix sind nur Kreuze für diejenigen der Schaltelemente, d.h. die Schaltelemente A-F sowie die Kupplung K1 und die Bremse B2, gesetzt, die für den jeweiligen der Vorwärtsgänge V1-V7 notwendig sind und in dem jeweiligen Gang betätigt bzw. geschlossen werden. In der vorletzten Spalte der Schaltmatrix sind beispielhaft die Gangübersetzungen i der geschalteten Vorwärtsgänge V1-V7 angegeben. Außerdem ist in der letzten Spalte der Schaltmatrix das daraus resultierende Übersetzungsverhältnis phi des nächstniedrigeren Gangs zu dem betreffenden Vorwärtsgang V1-V7 angegeben.

Der Vorteil des Getriebes, wie es in Fig.1a sowie anhand der Übersetzungstabelle in Fig. 1b und der Schaltmatrix in Fig. 1c gezeigt ist, liegt darin, dass alle Schaltelemente von außen zugänglich sind. Des Weiteren sind für Schaltgabeln keine Topfdurchgriffe notwendig.

Ein derartiges Lastschaltgetriebe wäre ohne einen Rückwärtsgang oder kurz R-Gang unvollständig. Der in Fig. 1a und den dazugehörenden Fig. 1b und 1c dargestellte Radsatz dient daher als Grundlage für verschiedene Varianten von Rückwärtsgängen bzw. im Folgenden kurz R-Gängen.

Die Synchronisierung der Schaltelemente A-F kann beispielsweise konventionell erfolgen in Form von einzeln synchronisierten Schaltelementen oder mit einer Zentralsynchronisierung für beide Teilgetriebe TG1 und TG2, z.B. mittels einer Getriebebremse und/oder mittels einer oder mehrerer elektrischer Maschinen.

Dadurch, dass der dritte Planetenradsatz PG3 und der vierte Planetenradsatz PG4 geschachtelt angeordnet sind, kann axialer Bauraum eingespart werden. Die Schachtelung ist wegen der betragsmäßig kleinen Standardgetriebeübersetzung i0 des äußeren, dritten Planetenradsatzes PG3 möglich. Die Getriebeübersetzung beträgt dabei z.B. i0_PG3 = -1,43, d.h., dass das Sonnenrad 103 des dritten Planetenradsatzes PG3 einen großen Durchmesser aufweist.

Grundsätzlich können der dritte und vierte Planetenradsatz PG3 und PG4 aber auch nebeneinander angeordnet werden.

Des Weiteren können die Reibschaltelemente, d.h. die Kupplung K1 und die Bremse B2, auch konstruktiv am Umfang des ersten und zweiten Planetenradsatz PG1 und PG2 geschachtelt werden. Der Vorteil ist hierbei, dass ebenfalls axialer Bauraum eingespart werden kann.

Fig. 2a zeigt ein Getriebe gemäß einer zweiten Ausführungsform der Erfindung.

In Fig. 2a ist ein Mehrstufengetriebe, hier ein Doppelkupplungsgetriebe 10 mit vierzehn Gängen, umfassend zwei Overdrive-Gänge in Planentenbauweise gezeigt. Das Doppelkupplungsgetriebe 10 mit seinen sieben Gängen und den zwei Overdrive-Gängen entspricht dabei im Wesentlichen in seinem Aufbau dem Getriebe 1 gemäß Fig. 1a, welches im Folgenden als Hauptgetriebe bezeichnet wird, erweitert um eine Range-Gruppe mit drei Bereichen (Low, High und R).

Das Doppelkupplungsgetriebe 10 unterscheidet sich von dem Getriebe 1 gemäß Fig. 1a dadurch, dass zusätzlich ein fünfter und sechster Planetenradsatz PG5 und PG6, sowie drei weitere Schaltelemente R, H und L angeordnet sind. Dabei fasst z.B. das Doppelschaltelement H/L die beiden Schaltelemente H und L zusammen.

Die beiden zusätzlichen Planetenradsätze PG5 und PG6 sind nun auf folgende Weise angebunden: Der Steg 134 des vierten Planetenradsatzes PG4 ist drehfest mit der dritten Getriebwelle GW3 verbunden, wie auch das Sonnenrad 105 des fünften Planetenradsatzes PG5. Dementsprechend ist der Steg 134 des vierten Planetenradsatzes PG4 drehfest mit dem Sonnenrad 105 des fünften Planentenradsatzes PG5 verbunden. Der fünfte Planetenradsatz PG5 weist den Planeten 115 auf, welcher auf einem Steg 125 drehbar gelagert ist. Der Steg 125 ist des Weiteren drehfest mit einem Hohlrad 136 des sechsten Planetenradsatzes PG6 verbunden. Der sechste Planetenradsatz PG6 weist des Weiteren einen Planeten 116 auf, welcher auf einem Steg 126 des sechsten Planetenradsatzes PG6 drehbar gelagert ist. Der Steg 126 des sechsten Planetenradsatzes PG6 ist dabei mit einer Abtriebswelle AW verbunden.

Wie zuvor beschrieben, ist ein zusätzliches Schaltelement R vorgesehen. Dieses Schaltelement R verbindet, wenn es betätigt oder geschlossen ist, den Steg 125 des fünften Planetenradsatz PG5 drehfest mit dem Gehäuse G.

Des Weiteren ist das zusätzlich vierte Doppelschaltelement H/L vorgesehen. Das Schaltelement H verbindet dabei, wenn es betätigt oder geschlossen ist, den Steg 125 des fünften Planetenradsatzes PG5 mit dem Sonnenrad 106 des sechsten Planetenradsatzes PG6. Ist das Schaltelement L dagegen betätigt oder geschlossen, so verbindet es den Steg 125 des fünften Planetenradsatzes PG5 mit dem Gehäuse G.

Die Range-Gruppe, mit dem zumindest ein Rückwärtsgang darstellbar ist, umfassend den inneren fünften Planetenradsatz PG5 und den äußeren sechsten Planetenradsatz PG6, sowie die Schaltelemente L, H und R. Es lässt sich bei der in Fig. 2a gezeigten Ausführungsform eine Verdoppelung der Gangzahl des Hauptgetriebes 1 durch eine der drei Bereichsgruppen L, H, R erreichen.

Die 7-8 Schaltung, d.h. die Schaltung vom siebten Gang V7 auf den achten Gang V8, ist zugkraftunterbrochen durch den Wechsel von L für "Low" auf H für "High". Dies ermöglicht den Einsatz des Getriebes insbesondere in Lastkraftwagen.

Der Gangsprung V7-V8, d.h. der Gangsprung vom siebten Gang auf den achten Gang, kann auch beispielsweise kleiner gewählt werden, wegen des Geschwindigkeitsverlusts des Fahrzeugs während der zugkraftunterbrochenen Schaltung. Sämtliche Rückwärtsgänge oder R-Gänge sind untereinander lastschaltbar. Die Umschaltung vorwärts/rückwärts unter Einsatz der Schaltelemente L und R ist dagegen nicht lastschaltbar.

Ein Vorteil dieser Ausführungsform gemäß Fig. 2a liegt darin, dass alle Schaltelemente A-F, sowie die Kupplung K1 und die Bremse B2 von außen zugänglich sind.

Die Ergänzung mit einer Range-Gruppe, wie sie in Fig. 2a gezeigt ist, ist bei allen Hauptgetriebe-Varianten möglich, die in der vorliegenden Anmeldung beschrieben sind. Die Range-Gruppe kann hierbei zumindest einen Rückwärtsgang bereitstellen.

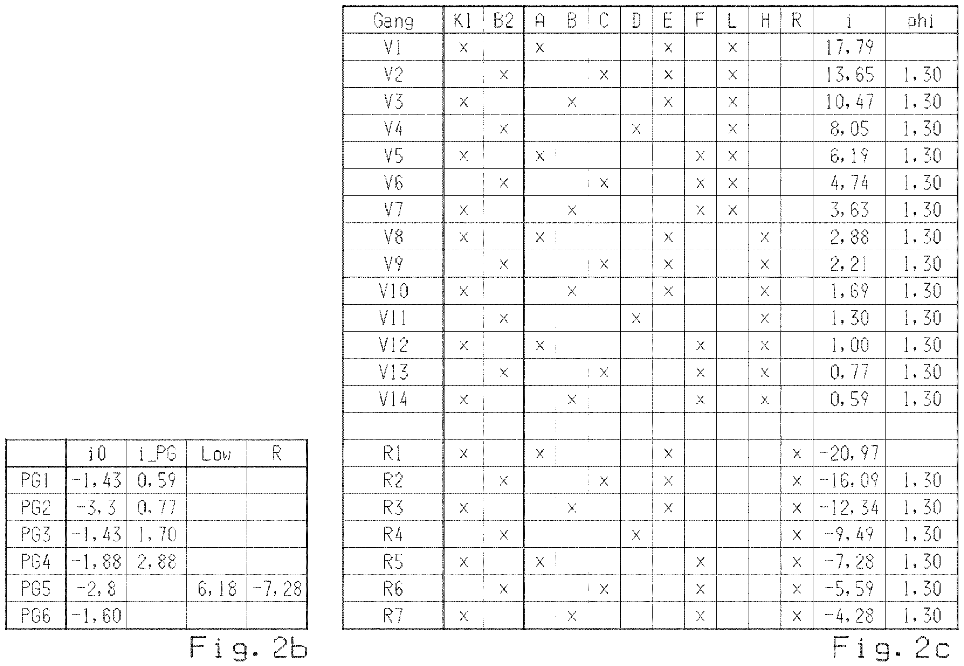

Fig. 2b zeigt ein Übersetzungsschema für ein Getriebe gemäß Fig. 2a.

In Fig. 2b beispielhaft eine Übersetzungstabelle für Übersetzungen der sechs Planetenradsätze PG1-PG6 des Getriebes gemäß Fig. 2a dargestellt. Dabei ist eine jeweilige Standgetriebeübersetzung i0 für die Planetenradsätze PG1-PG6 und eine jeweilige Übersetzung des Planetenradsatz i_PG für die Planetenradsätze PG1-PG6 angegeben.

Fig. 2c zeigt eine Schaltmatrix für ein Getriebe gemäß der Fig. 2a.

In Fig. 2c ist außerdem beispielhaft eine Schaltmatrix des Getriebes gemäß Fig. 2a gezeigt. In der in Fig. 2c gezeigten Schaltmatrix sind nur Kreuze für diejenigen der Schaltelemente, d.h. die Schaltelemente A-F, L, H und R sowie die Kupplung K1 und die Bremse B2, gesetzt, die für den jeweiligen der Vorwärtsgänge V1-V14 und Rückwärtsgänge R1-R7 notwendig sind und in diesem Gang betätigt bzw. geschlossen werden, ansonsten sind sie geöffnet In der vorletzten Spalte der Schaltmatrix sind beispielhaft die Gangübersetzungen i der geschalteten Vorwärtsgänge V1-V14 und Rückwärtsgänge R1-R7 angegeben. Außerdem ist in der letzten Spalte der Schaltmatrix das daraus resultierende Übersetzungsverhältnis phi des nächstniedrigeren Gangs zu dem betreffenden Gang angegeben. Mittels des Getriebes 10 gemäß Fig. 2a sind somit mindestens 14 Vorwärtsgänge und mindestens 7 Rückwärtsgänge darstellbar.

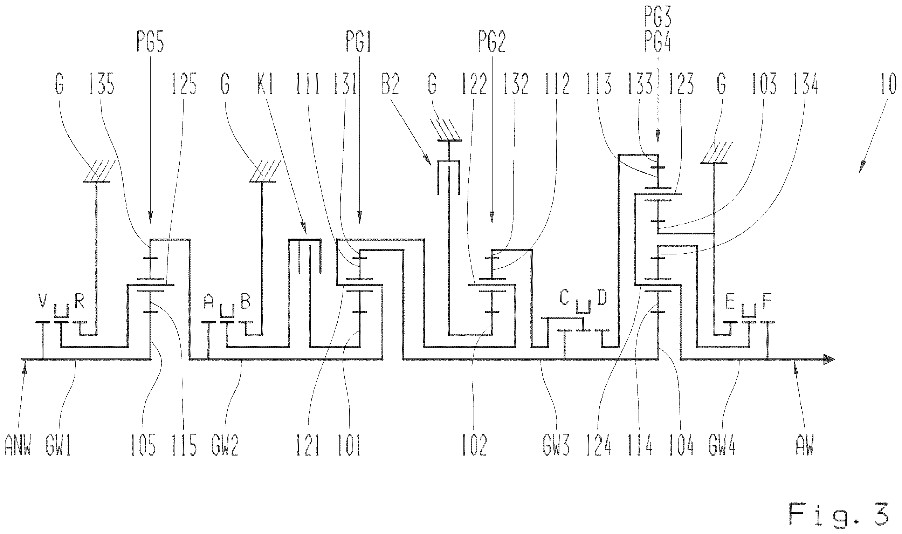

Fig. 3 zeigt ein Getriebe gemäß einer dritten Ausführungsform der vorliegenden Erfindung.

In Fig. 3 ist noch ein weiteres Mehrstufengetriebe 10 gezeigt. Das Mehrstufengetriebe 10 stellt dabei ein Ausführungsbeispiel mit zumindest einem darstellbaren Rückwärtsgang bzw. kurz R-Gang mittels eines Wendesatzes bzw. Planetenradsatzes PG5 am Getriebeeingang dar.

Das Hauptgetriebe 1 des Mehrstufengetriebes 10 entspricht in seinem Aufbau dem Getriebe 1 gemäß Fig. 1a, so dass bezüglich des Aufbaus des Hauptgetriebes 1 auf die Beschreibung zu den Fig. 1a-1c verwiesen wird.

Das Mehrstufengetriebe 10 unterscheidet sich von dem Getriebe 1 gemäß Fig. 1a dadurch, dass zusätzlich der fünfte Planetenradsatz PG5, sowie zwei Schaltelemente V und R vorgesehen sind. Die zwei Schaltelemente V und R sind dabei z.B. in dem Doppelschaltelement V/R, zusammenfasst. Der fünfte Planetenradsatz PG5 und das Doppelschaltelement V/R bilden dabei eine Vorschaltgruppe und sind am Getriebeeingang des Hauptgetriebes 1 vorgesehen. Bei der in Fig. 3 gezeigten Ausführungsform des Mehrstufengetriebes 10 ist hierbei bei der Darstellung der Vorwärtsgänge immer das Schaltelement V geschaltet und bei der Darstellung der Rückwärtsgänge immer das Schaltelement R des Doppelschaltelements V/R geschaltet.

Wie in Fig.3 gezeigt ist, ist das Sonnenrad 105 des fünften Planentenradsatzes PG5 drehfest mit der Antriebswelle ANW bzw. ersten Getriebewelle GW1 verbunden. Des Weiteren weist der fünfte Planetenradsatz PG5 einen Planeten 115 auf, welcher auf einem Steg 125 drehbar gelagert ist. Des Weiteren ist das Hohlrad 135 des fünften Planetenradsatzes PG5 drehfest mit der zweiten Getriebewelle GW2 und dem entsprechend drehfest mit dem Steg 111 des ersten Planetenradsatzes PG1 verbunden. Der Steg 111 ist ebenfalls drehfest mit der zweiten Getriebewelle GW2 verbunden. Ist das Schaltelement V für den Vorwärtsgang betätigt, so verbindet das Schaltelement V die Antriebswelle ANW und das mit ihr drehfest verbundene Sonnenrad 105 des fünften Planetenradsatzes PG5 mit dem Steg 115 des fünften Planetenradsatzes PG5. Ist dagegen das Schaltelement R zur Darstellung eines Rückwärtsgangs betätigt, so verbindet das Schaltelement R den Steg 115 des fünften Planetenradsatzes PG5 mit dem Gehäuse G, so dass der Steg 115 gehäusefest ist.

Bei der Ausführungsform des Mehrstufengetriebes 10 in Fig. 3 sind die Rückwärtsgänge kürzer als die entsprechenden Vorwärtsgänge und zwar um den Faktor der Standübersetzung i0 des fünften Planetenradsatzes PG5. In den kurzen Rückwärtsgängen bzw. R-Gängen kann eine VM-Motorbegrenzung bzw. Motorbegrenzung eines Antriebsmotors vorgesehen werden, da sonst der R-Gang auslegungsrelevant für das Mehrstufengetriebe und dessen Momentbelastung ist.

Die kurzen R-Gänge haben den Vorteil, dass sie feinfühliger beim Rückwärtsrangieren sind. Es wird eine geringe Fahrgeschwindigkeit im VM-Leerlauf bzw. Leerlauf des Antriebsmotors bei geschlossener Kupplung K1 erzeugt. Die R-Gänge sind des Weiteren untereinander lastschaltbar.

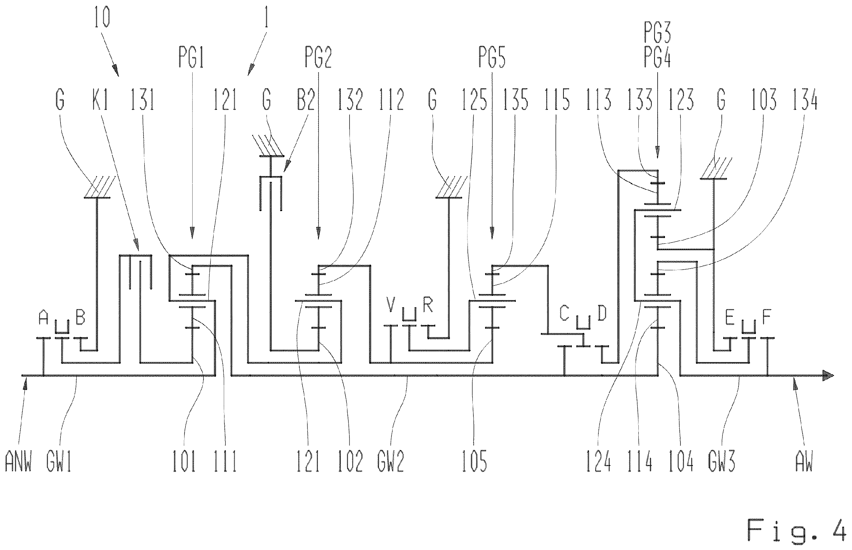

Fig. 4 zeigt ein Getriebe gemäß noch einer vierten Ausführungsform der vorliegenden Erfindung.

In Fig. 4 ist ein weiteres Mehrstufengetriebe dargestellt. Das Mehrstufengetriebe 10 stellt dabei ein Ausführungsbeispiel mit zumindest einem darstellbaren Rückwärtsgang mittels eines Wendesatzes bzw. fünften Planetenradsatzes PG5 innerhalb des zweiten Teilgetriebes TG2 dar.

Das Hauptgetriebe 1 des Mehrstufengetriebes 10 entspricht in seinem Aufbau dem Getriebe gemäß Fig. 1a, so dass bezüglich des Aufbaus des Hauptgetriebes auf die Beschreibung in Fig. 1a-1c verwiesen wird.

Das Mehrstufengetriebe 10 unterscheidet sich von dem Getriebe gemäß Fig. 1a dadurch, dass zusätzlich der fünfter Planetenradsatz PG5, sowie die Schaltelemente V und R vorgesehen sind. Die beiden Schaltelemente V und R werden dabei z.B. in dem Doppelschaltelement zusammenfasst. Der fünfte Planetenradsatz PG5 und die Schaltelemente V und R sind bei dieser Ausführungsform innerhalb des zweiten Teilgetriebes TG2 vorgesehen. Bei der in Fig. 4 gezeigten Ausführungsform des Mehrstufengetriebes 10 ist bei der Darstellung von Vorwärtsgängen ebenfalls immer das Schaltelement V betätigt und bei der Darstellung von Rückwärtsgängen immer das Schaltelement R des Doppelschaltelements V/R betätigt.

Bei der in Fig. 4 gezeigten Ausführungsform ist das Sonnenrad 105 des fünften Planetenradsatzes PG5 drehfest mit dem Hohlrad 132 des zweiten Planetenradsatzes PG2 verbunden. Der Planet 115 des fünften Planetenradsatzes PG5 ist auf dem Steg 125 des fünften Planetenradsatzes PG5 drehbar gelagert, wobei der Steg 125 durch das vierte Doppelschaltelement V/R koppelbar ist. Das Hohlrad 135 des fünften Planetenradsatzes PG5 ist wiederum durch das zweite Doppelschaltelement C/D koppelbar. Ist das Schaltelement V zur Darstellung eines Vorwärtsganges betätigt, so verbindet es den Steg 125 mit dem Sonnenrad 105 des fünften Planetenradsatz PG5. Ist dagegen das Schaltelement R zur Darstellung eines Rückwärtsganges betätigt, so verbindet es den Steg 125 des fünften Planetenradsatzes PG5 mit dem Gehäuse G, so dass der Steg 125 gehäusefest ist. Ist des Weiteren das dritte Schaltelement C betätigt, so verbindet es das Hohlrad 135 des fünften Planetenradsatzes PG5 mit dem Sonnenrad 104 des vierten Planetenradsatzes PG4. Ist dagegen das vierte Schalelement D betätigt, so verbindet es das Hohlrad 135 des fünften Planetenradsatzes PG5 mit dem Hohlrad 133 des dritten Planetenradsatzes PG3.

Die Rückwärtsgänge bzw. R-Gänge sind in diesem Ausführungsbeispiel kürzer als die entsprechenden Vorwärtsgänge des zweiten Teilgetriebes TG2 ausgeführt und zwar um den Faktor der Standübersetzung i0 des fünften Planetenradsatzes PG5. Die R-Gänge sind untereinander lastschaltbar. Des Weiteren ist der Wechsel zwischen Vorwärts- und Rückwärtsgängen lastschaltbar, wenn in dem ersten Teilgetriebe TG1 ein Vorwärtsgang vorgewählt wird und in dem zweiten Teilgetriebe TG2 ein Rückwärtsgang vorgewählt wird. Dies ist vorteilhaft zum dynamischen Reversieren bzw. Freischaukeln aus einer Mulde.

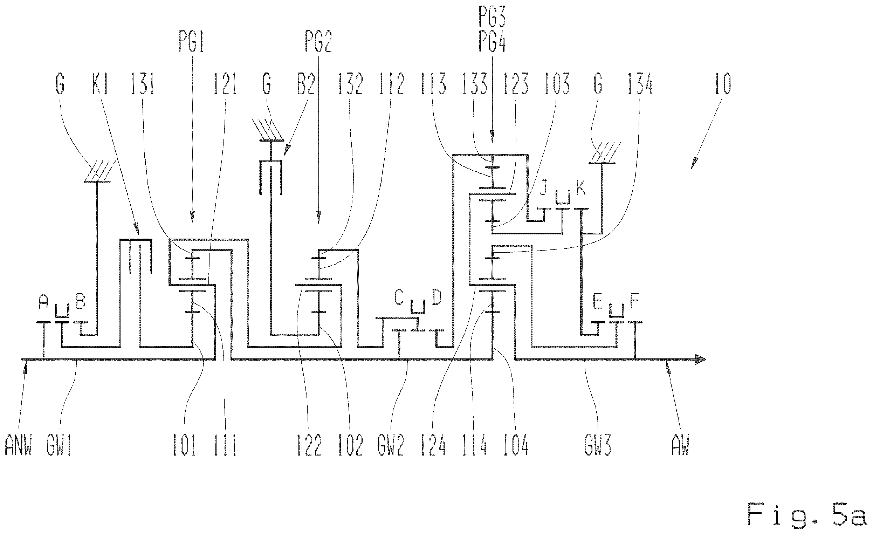

Fig. 5a zeigt ein Getriebe gemäß einer fünften Ausführungsform der vorliegenden Erfindung.

In Fig. 5a ist noch ein weiteres Mehrstufengetriebe 10 dargestellt. Das Mehrstufengetriebe 10 stellt dabei eine Variante des Getriebes 1 gemäß Fig. 1a dar, wobei diese Variante einen Blockumlauf des dritten Planetenradsatzes PG3 aufweist und des Weiteren die zusätzlichen Schaltelemente J und K. Diese beiden Schaltelemente J und K sind z.B. als Doppelschaltelement J/K zusammengefasst. Das in Fig. 5a gezeigte Getriebe 1 ist ein7-Gang Getriebe, umfassend 2 Overdrive-Gänge.

Das Mehrstufengetriebe 10 entspricht in seinem Aufbau im Wesentlichen dem Getriebe gemäß Fig. 1a, so dass bezüglich des Aufbaus des Mehrstufengetriebes 10 auf die Beschreibung in Fig. 1a verwiesen wird.

Im Unterschied zu dem Getriebe in Fig.1a, sind das Sonnenrad 103 und das Hohlrad 133 des dritten Planetenradsatzes PG3 mittels des zusätzlichen vierten Doppelschaltelementes J/K koppelbar. Ist das Schaltelement J betätigt, so verbindet dieses das Sonnenrad 103 und das Hohlrad 133 des dritten Planetenradsatzes PG3. Ist dagegen das Schaltelement K betätigt, so verbindet es das Sonnenrad 103 mit dem Gehäuse G. Das zusätzliche vierte Doppelschaltelement J/K ermöglicht einen Blockumlauf des dritten Planetenradsatz PG3 in allen Gängen außer dem 4. Vorwärtsgang. In dem 4.Vorwärtsgang ist das Schaltelement D betätigt oder geschlossen und der Kraftfluss geht über die von dem dritten Planetenradsatz PG3 bereitgestellte Übersetzung. Zum Blockumlauf an dem dritten Planetenradsatz PG3 wird das Schaltelement J in allen Gängen außer dem 4.Vorwärtsgang betätigt oder geschlossen. Im 6.Vorwärtsgang kann dann anstelle des dritten Schaltelements C auch das vierte Schaltelement D betätigt werden bzw. betätigt bleiben. Der Blockumlauf erzeugt immer die Übersetzung i=1. Wenn der 4.Vorwärtsgang benötigt wird und hierzu das Schaltelement D geschlossen wird, muss das Sonnenrad 103 des dritten Planetenradsatzes PG3 mit dem Schaltelement K gebremst werden. Das Schaltelement J kann alternativ auch das Sonnenrad 103 des dritten Planetenradsatzes PG3 mit dem Steg 125 bzw. Hohlrad 133 des dritten Planetenradsatzes PG3 verbinden bzw. koppeln.

Der Vorteil der in Fig. 5a gezeigten Ausführungsform besteht darin, dass der Blockumlauf an dem dritten Planetenradsatz PG3 Schleppverluste vermeidet durch lastfrei abwälzende Zahnräder und drehende Planetenräder bei dem dritten Planetenradsatz PG3 (Planetenradlagerung).

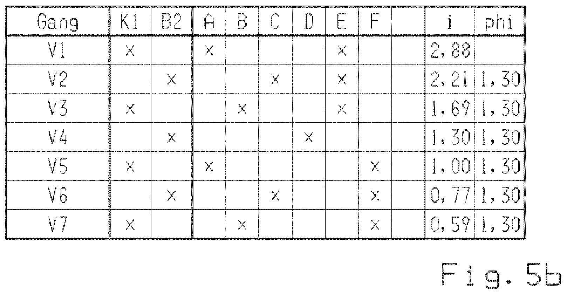

Fig. 5b zeigt ein Übersetzungsschema für ein Getriebe gemäß Fig. 5a.

Des Weiteren ist in Fig. 5b ist außerdem eine mögliche Schaltmatrix für ein Getriebe gemäß Fig. 5a gezeigt. In der in Fig. 5b gezeigten Schaltmatrix sind nur Kreuze für diejenigen der Schaltelemente, d.h. die Schaltelemente A-F sowie die Kupplung K1 und die Bremse B2, gesetzt, die für den jeweiligen der Vorwärtsgänge V1-V7 notwendig sind und in diesem Gang betätigt bzw. geschlossen werden. In der vorletzten Spalte der Schaltmatrix sind beispielhaft die Gangübersetzungen i der geschalteten Vorwärtsgänge V1-V7 angegeben. Außerdem ist in der letzten Spalte der Schaltmatrix das daraus resultierende Übersetzungsverhältnis phi des nächstniedrigeren Vorwärtsgangs zu dem betreffenden Vorwärtsgang V1-V7 angegeben.

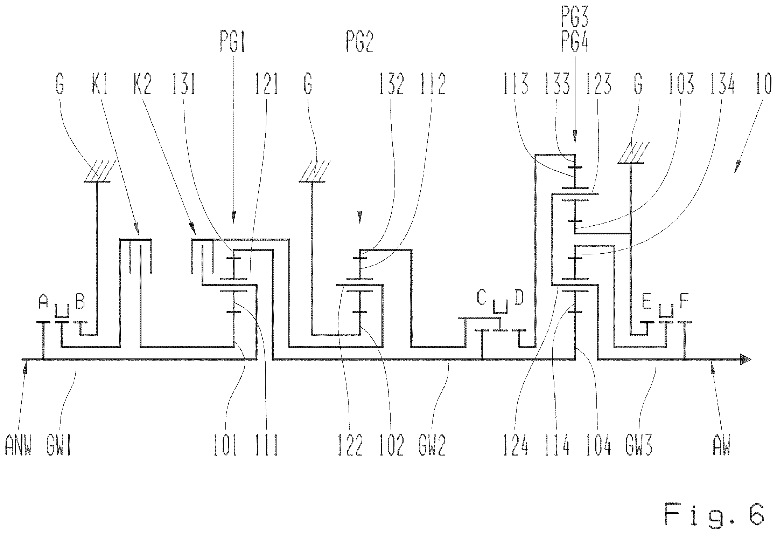

Fig. 6 zeigt ein Getriebe gemäß einer sechsten Ausführungsform der vorliegenden Erfindung.

In Fig. 6 ist noch ein weiteres Mehrstufengetriebe 10 dargestellt. Das Mehrstufengetriebe stellt dabei eine weitere Variante des Getriebes 1 gemäß Fig. 1a dar. Das Mehrstufengetriebe 10 entspricht in seinem Aufbau im Wesentlichen dem Getriebe gemäß Fig. 1a, so dass bezüglich des Aufbaus des Mehrstufengetriebes 10 auf die Beschreibung in Fig. 1a verwiesen wird.

Die Ausführungsform, wie sie in Fig. 6 dargestellt ist, unterscheidet sich von dem Getriebe 1 gemäß Fig. 1a dadurch, dass anstelle der Bremse B2, wie in dem Getriebe in Fig. 1a, eine zweite Kupplung K2 vorgesehen ist, die zwischen dem Steg 121 des ersten Planetenradsatzes PG1 und dem Steg 122 des zweiten Planetenradsatzes PG2 angeordnet ist. Ist die Kupplung K2 betätigt, so verbindet sie den Steg 121 des ersten Planetenradsatzes PG1 und die mit dem Steg 121 drehfest verbundene Antriebswelle ANW bzw. erste Getriebewelle GW1 mit dem Sonnenrad 102 des zweiten Planetenradsatzes PG2.

Der Kraftfluss über das zweite Teilgetriebe TG2 kann anstatt über die Bremse B2, wie bei dem Getriebe 1 in Fig. 1, auch mittels der zusätzlichen zweiten Kupplung K2 an dem Sonnenrad 102 des zweiten Planetenradsatzes PG2 geschaltet werden. Die Kupplung K2 verbindet die Antriebswelle ANW des Antriebsmotors mit einer Eingangswelle des zweiten Teilgetriebes TG2. Unterschiede gibt es bei der Auslegung des Reibschaltelements bzw. zweiter Kupplung K2 im Vergleich zu einer Bremse B2. Es liegen jeweils andere Drehmoment-Stützfaktoren und andere Differenzdrehzahlen an dem Reibschaltelement vor. Das Schaltschema für das Getriebe in Fig. 6 entspricht dem Schaltschema gemäß Fig. 1b für das Getriebe in Fig. 1a. Lediglich wird bei dem Getriebe in Fig. 6 anstelle der Bremse B2 die Kupplung K2 betätigt oder geschlossen.

Bei dem in Fig. 6 gezeigten Getriebe ist in einem weiteren Ausführungsbeispiel (nicht dargestellt) die zweite Kupplung K2 zwischen dem Hohlrad 132 des zweiten Planetenradsatzes PG2 und dem Doppelschaltelement C/D angeordnet. Es liegen dann wieder andere Drehmoment-Stützfaktoren und andere Differenzzahlen am Reibschaltelement vor.

Ebenso ist in einem anderen nicht dargestellten Ausführungsbeispiel des in Fig. 6 gezeigten Getriebes die erste Kupplung K1 zwischen dem Hohlrad 131 des ersten Planetenradsatzes PG1 und dem Sonnenrad 104 des vierten Planetenradsatzes PG4 angeordnet, jedoch vor dem Schaltelement C (nicht dargestellt). Die erste Kupplung K1 ist in diesem Fall innenliegend.

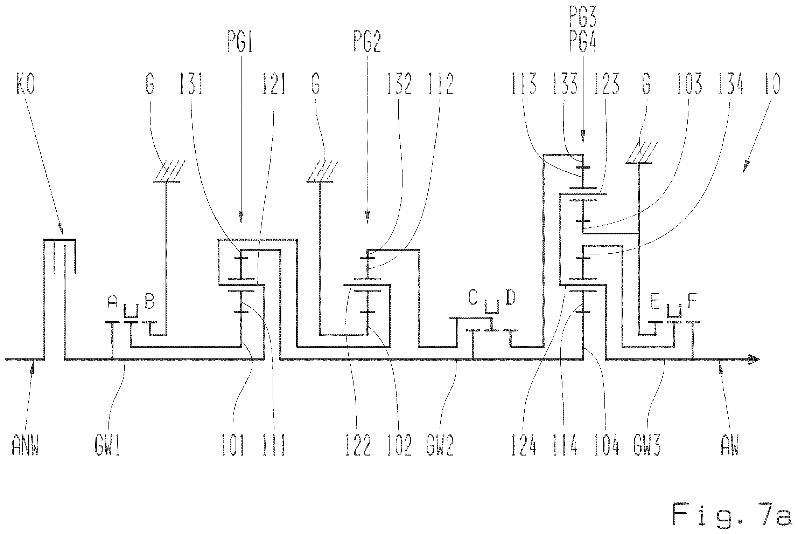

Fig. 7a zeigt ein Getriebe gemäß einer siebten Ausführungsform der vorliegenden Erfindung.

In Fig. 7a ist ein Mehrstufengetriebe 10 in Form einer weiteren Variante des Getriebes 1 gemäß Fig. 1a gezeigt. Das Mehrstufengetriebe 1 entspricht in seinem Aufbau im Wesentlichen dem Getriebe gemäß Fig. 1a, so dass bezüglich des Aufbaus des Mehrstufengetriebes 1 auf die Beschreibung in Fig. 1a-1c verwiesen wird.

Im Gegensatz zu dem Mehrstufengetriebe gemäß Fig. 1a, sind bei dem Getriebe 10 in Fig. 7a jedoch die beiden Lastschaltelemente, d.h. die Kupplung K1 und die Bremse B2 in Fig. 1a bzw. entsprechend die Kupplung K2 in Fig. 6, durch feste Verbindungen ersetzt. Hierdurch entsteht ein nicht lastschaltbares, automatisiertes Schaltgetriebe (AMT). Schaltungen sind dann nur mit Zugkraftunterbrechung möglich. Bei dem in Fig. 7a gezeigten Getriebe 1 handelt es sich z.B. um ein 7-Gang Getriebe, umfassend 2 Overdrive-Gänge.

Wie in Fig. 7a dargestellt ist, ist das Sonnenrad 102 des zweiten Planetenradsatzes PG2 mit dem Gehäuse G verbunden und somit gehäusefest. Des Weiteren wird bei dem Mehrstufengetriebe in Fig. 7a, der Steg 122 des zweiten Planetenradsatzes PG2 mit der zusätzlichen Trennkupplung K0 verbunden, wenn das erste Schaltelement A des ersten Doppelschaltelements A/B betätigt ist. Ist hierbei außerdem die zusätzliche Kupplung K0 betätigt, so verbindet die Kupplung K0 den Steg 122 des zweiten Planetenradsatzes PG2 mit der Antriebswelle ANW. Ist dagegen das zweite Schaltelement B des ersten Doppelschaltelements A/B betätigt, so wird das Sonnenrad 101 des ersten Planetenradsatzes PG1 mit dem Gehäuse G verbunden, so dass es gehäusefest ist.

Die zusätzliche Trennkupplung K0 ist als herkömmliche Anfahrkupplung in dem Getriebe in Fig. 7a vorgesehen. Rückwärtsgänge fehlen hier. Diese müssen durch eine zusätzliche Baugruppe bereitgestellt werden, z.B. durch eine Kombination mit einer Bereichsgruppe mit zumindest einem integrierten Rückwärtsgang.

Die in Fig. 7a gezeigte Ausführungsform ist eine kostengünstige Variante des Radsatzes. Des Weiteren ist eine Steigerung des Wirkungsgrads möglich durch den Wegfall der Lastschaltelemente. Außerdem kann der Grundradsatz als Basis sowohl für ein Lastschaltgetriebe (DCT-ähnlich) als auch für ein automatisiertes Schaltgetriebe mit Zugkraftunterbrechung genutzt werden.

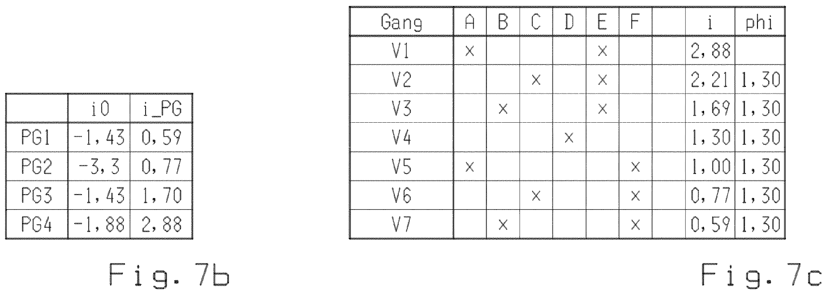

In einer Variante (nicht dargestellt) des in Fig. 7a gezeigten Getriebes, wird bei dem dritten Planetenradsatz PG3 anstelle dessen gehäusefestem Sonnenrad 103 ein gemeinsames Bauteil aus dem Sonnenrad 103 des dritten Planetenradsatzes PG3 und dem Hohlrad 134 des vierten Planetenradsatzes PG4 verwendet. Der Vorteil ist hierbei, dass ein Blockumlauf des dritten Planetenradsatzes PG3 erzeugt wird, wenn das sechste Schaltelement F des dritten Doppelschaltelements E/F betätigt oder geschlossen ist. Es tritt dabei kein Lagerverlust bei den Planeten 113 des dritten Planetenradsatzes PG3 auf. Eine vorbereitende Hintergrundschaltung des dritten Doppelschaltelements E/F ist nicht mehr möglich, was eine längere Schaltdauer beim Schalten vom 4. Gang auf den 5. Gang bewirkt. Bei der Schaltmatrix des Getriebes, wie in nachfolgender Fig. 7c gezeigt, muss daher, um bei dieser Variante das Sonnenrad 103 des dritten Planetenradsatzes PG3 gehäusefest zu halten, im 4. Gang das fünfte Schaltelement E betätigt oder geschlossen bleiben.

Fig. 7b zeigt ein Übersetzungsschema für ein Getriebe gemäß Fig. 7a.

In Fig. 7b ist eine Schaltmatrix für ein Getriebe gemäß Fig. 7a gezeigt. In der in Fig. 7b gezeigten Schaltmatrix sind nur Kreuze für diejenigen der Schaltelemente, d.h. die Schaltelemente A-F, gesetzt, die für die Darstellung der jeweiligen Vorwärtsgänge 1-7 notwendig sind und in diesem Gang betätigt bzw. geschlossen werden. In der vorletzten Spalte der Schaltmatrix sind beispielhaft die Gangübersetzungen i der geschalteten Vorwärtsgänge 1-7 angegeben. Außerdem ist in der letzten Spalte der Schaltmatrix das daraus resultierende Übersetzungsverhältnis phi des nächstniedrigeren Gangs zu dem betreffenden Vorwärtsgang 1-7 angegeben.

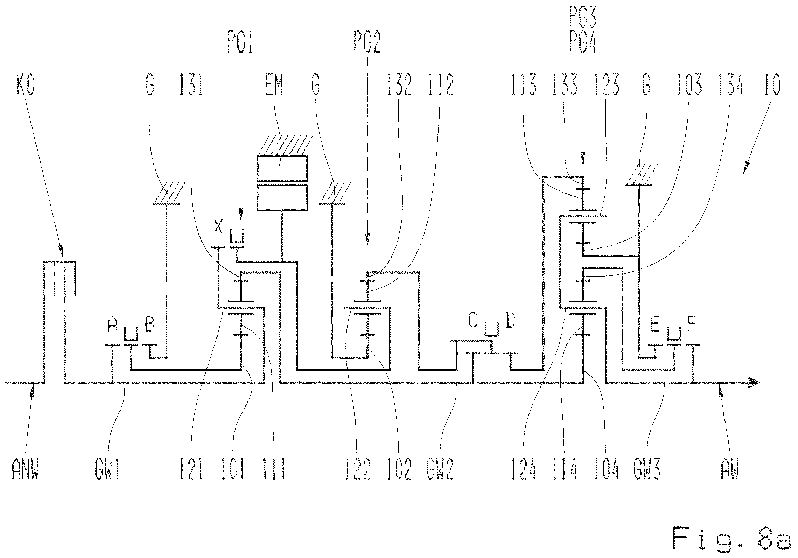

Fig. 8a zeigt ein Getriebe gemäß einer achten Ausführungsform der vorliegenden Erfindung.

In Fig. 8a ist noch ein weiteres Mehrstufengetriebe 10 dargestellt. Das Mehrstufengetriebe 10 stellt dabei noch eine weitere Variante des Getriebes 1 gemäß Fig. 8a dar. Das Mehrstufengetriebe 1 entspricht in seinem Aufbau im Wesentlichen dem Getriebe 10 gemäß Fig. 7a, so dass bezüglich des Aufbaus des Mehrstufengetriebes 10 auf die Beschreibung zu den Fig. 7a-7c und damit verbunden auf die Beschreibung zu den Fig. 1a-1c verwiesen wird.

Das Mehrstufengetriebe 10 gemäß Fig. 8a unterscheidet sich von dem Getriebe 1 gemäß Fig. 1a dadurch, dass die Kupplung K1 entfällt und stattdessen die Trennkupplung K0, wie zuvor in Fig. 7a, vorgesehen ist. Die Trennkupplung K0 dient als herkömmliche Anfahrkupplung und verbindet den Antriebsmotor oder Verbrennungsmotor mit der Antriebswelle ANW. Die Kopplung des Antriebsmotors an das erste Teilgetriebe TG1 erfolgt in dem Ausführungsbeispiel in Fig. 8a alleine durch das Doppelschaltelement A/B.

Des Weiteren wird die Bremse B2 in Fig. 1a bzw. die entsprechende Kupplung K2 in Fig. 6, durch ein zusätzliches Schaltelement X ersetzt. Ist das zusätzliche Schaltelement X betätigt oder geschlossen, so verbindet es die Antriebswelle ANW mit dem Steg 122 des zweiten Planentenradsatzes PG2. Es erfolgt eine Kopplung des Antriebsmotors an das zweite Teilgetriebe TG2. Außerdem ist eine elektrische Maschine EM für eine Lastschaltung angeordnet. Hierbei erfolgt eine Zugkraftstützung durch die elektrische Maschine EM immer über das zweite Teilgetriebe TG2. Bei einer Schaltung in dem zweiten Teilgetriebe TG2 erhält der Antriebsmotor eine Zugkraft über das erste Teilgetriebe TG1. Dies bedeutet, dass immer nur abwechselnd zwischen dem ersten Teilgetriebe TG1 und dem zweiten Teilgetriebe TG2 geschaltet wird.

Ein Rückwärtsgang bzw. R-Gang bzw. Rückwärtsgangstufe ist verzichtbar, indem zum Rückwärtsfahren die elektrische Maschine EM im Vorwärtsgang rückwärtsdreht.

Die Reib-Trennkupplung K0 ist optional. Sie kann als Anfahrkupplung vorgesehen werden, wenn die elektrische Maschine EM zu schwach oder der Energiespeicher oder elektrische Speicher der elektrischen Maschine EM leer ist. Die Trennkupplung K0 dient zum Öffnen bei Getriebesynchronisation. Die Schaltung erfolgt dann wie bei einem automatisierten Schaltgetriebe in dem ersten Teilgetriebe TG1. Das zweite Teilgetriebe TG2, d.h. das zweite Doppelschaltelement C/D, wird immer durch die Drehzahlregelung der elektrischen Maschine EM synchronisiert.

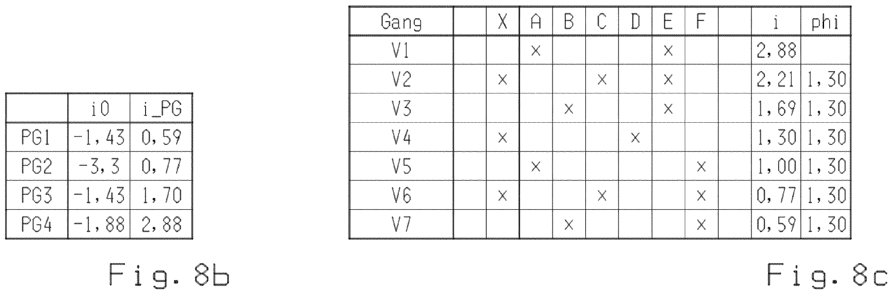

Fig. 8b zeigt ein Übersetzungsschema für ein Getriebe gemäß Fig. 8a.

In Fig. 8b ist beispielhaft eine Übersetzungstabelle für Übersetzungen der vier Planetenradsätze PG1-PG4 des Getriebes 10 gemäß Fig. 8a dargestellt. Dabei ist eine jeweilige Standgetriebeübersetzung i0 für die Planetenradsätze PG1-PG4 und eine jeweilige Übersetzung des Planetenradsatz i_PG für die Planetenradsätze PG1-PG4 angegeben.

In Fig. 8c ist außerdem eine Schaltmatrix für ein Getriebe gemäß Fig. 8a gezeigt. In der in Fig. 8c gezeigten Schaltmatrix sind nur Kreuze für diejenigen der Schaltelemente, d.h. die Schaltelemente A-F und X, gesetzt, die für den jeweiligen der Vorwärtsgänge V1-V7 notwendig sind und in diesem Gang betätigt bzw. geschlossen werden. In der vorletzten Spalte der Schaltmatrix sind beispielhaft die Gangübersetzungen i der geschalteten Vorwärtsgänge V1-V7 angegeben. Außerdem ist in der letzten Spalte der Schaltmatrix das daraus resultierende Übersetzungsverhältnis phi des nächstniedrigeren Gangs zu dem betreffenden Vorwärtsgang V1-V7 angegeben.

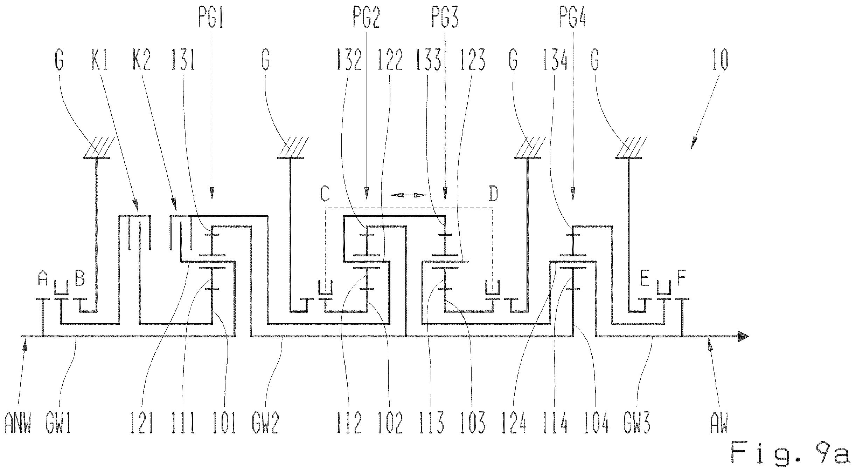

Fig. 9a zeigt ein Getriebe gemäß einer neunten Ausführungsform der vorliegenden Erfindung.

In Fig. 9a ist ein weiteres Mehrstufengetriebe 10 gezeigt. Das Mehrstufengetriebe 10 stellt dabei eine weitere Variante des Getriebes 1 gemäß Fig. 1a dar. Das Mehrstufengetriebe 1 entspricht in seinem Aufbau im Wesentlichen dem Getriebe gemäß Fig. 1a, so dass bezüglich des Aufbaus des Mehrstufengetriebes 1 auf die Beschreibung in Fig. 1 verwiesen wird.

Das Getriebe 1 gemäß dem Ausführungsbeispiel in Fig. 9a weist im Gegensatz zu dem Mehrstufengetriebe gemäß Fig. 1a keinen geschachtelt angeordneten dritten und vierten Planetenradsatz PG3 und PG4 auf. Stattdessen sind der dritte und vierte Planetenradsatz PG3 und PG4 nebeneinander angeordnet. Das dritte und vierte Schaltelement C und D sind des Weiteren nicht als Doppelschaltelement zusammengefasst. Außerdem ist neben der ersten Kupplung K1 eine zweite Kupplung K2 vorgesehen. Ist die zweite Kupplung K2 betätigt oder geschlossen, so verbindet sie die Antriebswelle ANW oder erste Getriebewelle GW1, die drehfest mit dem Steg 122 des zweiten Planetenradsatzes PG2 verbunden ist, mit dem Hohlrad 133 des dritten Planetenradsatzes PG3. Das dritte Schaltelement C verbindet, wenn es betätigt oder geschlossen ist, das Sonnenrad 102 des zweiten Planetenradsatzes PG2 mit dem Gehäuse G, so dass das Sonnenrad 102 gehäusefest ist. Das Schaltelement D verbindet wiederum, wenn es betätigt oder geschlossen ist, das Sonnenrad 103 des dritten Planentenradsatzes PG3 mit dem Gehäuse G, so dass das Sonnenrad 103 gehäusefest ist.

Bei allen gezeigten Varianten des 7-Gang Getriebes mit zwei Overdrive-Gängen erzeugt das zweite Teilgetriebe TG2 eine Übersetzung k⁻¹, die über den vierten Planetenradsatz PG4 u.a. mittels des dritten Schaltelements C doppelt genutzt wird. Außerdem erzeugt das zweite Teilgetriebe TG2 eine Übersetzung k¹, die durch das vierte Schaltelement D unabhängig von dem vierten Planetenradsatz PG4 wirkt.

In der in Fig. 9a gezeigten Variante wird die Übersetzung k⁻¹ gleich wie bisher über den zweiten Planetenradsatz PG2 erzeugt. Dabei erfolgt der Antrieb des zweiten Planetenradsatzes PG2 über den Steg 122 des zweiten Planetenradsatzes PG2 und der Abtrieb über das Hohlrad 132 des zweiten Planetenradsatzes PG2. Das Sonnenrad 102 des zweiten Planetenradsatzes PG2 ist durch das Betätigen des dritten Schaltelements C mit dem Gehäuse G verbunden bzw. gehäusefest.

Die von dem vierten Planetenradsatz PG4 unabhängige Übersetzung k¹ wird bei dem Ausführungsbeispiel in Fig. 9a ausschließlich durch den dritten Planetenradsatz PG3 erzeugt und nicht mehr durch das Hintereinanderschalten des zweiten und dritten Planetenradsatzes PG2 und PG3. Der Antrieb des dritten Planetenradsatzes erfolgt hierbei über das Hohlrad 133 desselben PG3 und der Abtrieb über den Steg 123 desselben PG3. Das Sonnenrad 103 des dritten Planetenradsatzes PG3 wird durch Betätigen des vierten Schaltelements D mit dem Gehäuse G verbunden und ist somit gehäusefest.

Das Ausführungsbeispiel, wie es in Fig. 9a gezeigt ist, hat den Vorteil, dass der dritte Planetenradsatz PG3 eine betragsmäßig große Standgetriebeübersetzung i0 hat und daher niedrigere Planetendrehzahlen aufweist. Des Weiteren ist der Wirkungsgrad im 4. Vorwärtsgang besser, da der Kraftfluss nur über den dritten Planetenradsatz PG3 verläuft und nicht mehr über den zweiten und dritten Planetenradsatz PG2 und PG3. Eine Schachtelung des dritten und vierten Planetenradsatzes PG3 und PG4 ist nicht möglich wegen der Größe der Standgetriebeübersetzung i0 des dritten Planetenradsatzes PG3.

Das dritte und vierte Schaltelement C und D können beispielsweise über einen gemeinsamen Aktuator betätigt werden, wie in Fig. 9a mit einer gestrichelten Linie angedeutet ist. Ebenso kann jedes der beiden Schaltelemente C und D auch einen eigenen Aktuator aufweisen.

In einer nicht dargestellten Variante des in Fig. 9a gezeigten Ausführungsbeispiels ist das Getriebe derart ausgebildet, dass das dritte Schaltelement C das Hohlrad 132 des zweiten Planetenradsatzes PG2 mit dem Sonnenrad 104 des vierten Planetenradsatzes PG4 verbindet. Das dritte Schaltelement C ist dann innenliegend und nicht von außen zugänglich.

Gemäß einer weiteren nicht dargestellten Variante des in Fig. 9a gezeigten Ausführungsbeispiels ist das Getriebe derart ausgebildet, dass mittels des vierten Schaltelementes D auch der Steg 123 des dritten Planetenradsatzes PG3 mit dem Steg 124 des vierten Planetenradsatzes PG4 verbindbar ist (). In diesem Fall ist das Sonnenrad 103 des dritten Planetenradsatzes PG3 gehäusefest vorgesehen.

In einer weiteren nicht dargestellten Variante des in Fig. 9a gezeigten Ausführungsbeispiels ist das Getriebe derart ausgebildet, dass mittels des vierten Schaltelementes D der Steg 122 des zweiten Planetenradsatzes PG2 mit dem Hohlrad 133 des dritten Planetenradsatzes PG3 verbindbar. In diesem Fall ist das Sonnenrad 103 des dritten Planetenradsatzes PG3 ebenfalls gehäusefest angeordnet.

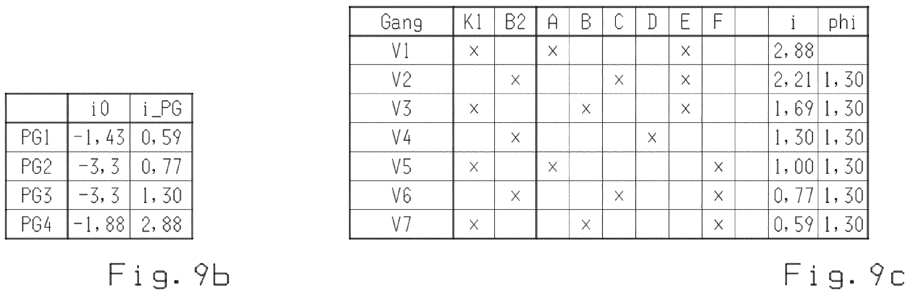

Fig. 9b zeigt ein Übersetzungsschema für ein Getriebe gemäß Fig. 9a.

Des Weiteren ist in Fig. 9b beispielhaft eine Übersetzungstabelle für Übersetzungen der vier Planetenradsätze PG1-PG4 des Getriebes gemäß Fig. 9a dargestellt. Dabei ist eine jeweilige Standgetriebeübersetzung i0 für die Planetenradsätze PG1-PG4 und eine jeweilige Übersetzung des Planetenradsatz i_PG für die Planetenradsätze PG1-PG4 angegeben.

Fig. 9c zeigt eine Schaltmatrix für ein Getriebe gemäß der Fig. 9a.

In Fig. 9c ist außerdem eine Schaltmatrix für ein Getriebe gemäß Fig. 9a gezeigt. In der in Fig. 9c gezeigten Schaltmatrix sind nur Kreuze für diejenigen der Schaltelemente, d.h. die Schaltelemente A- F und die beiden Kupplungen K1 und K2, gesetzt, die für den jeweiligen der Vorwärtsgänge V1-V7 notwendig sind und in diesem Gang betätigt bzw. geschlossen werden. In der vorletzten Spalte der Schaltmatrix sind beispielhaft die Gangübersetzungen i der geschalteten Vorwärtsgänge V1-V7 angegeben. Außerdem ist in der letzten Spalte der Schaltmatrix das daraus resultierende Übersetzungsverhältnis phi des nächstniedrigeren Gangs zu dem betreffenden Vorwärtsgang V1-V7 angegeben.

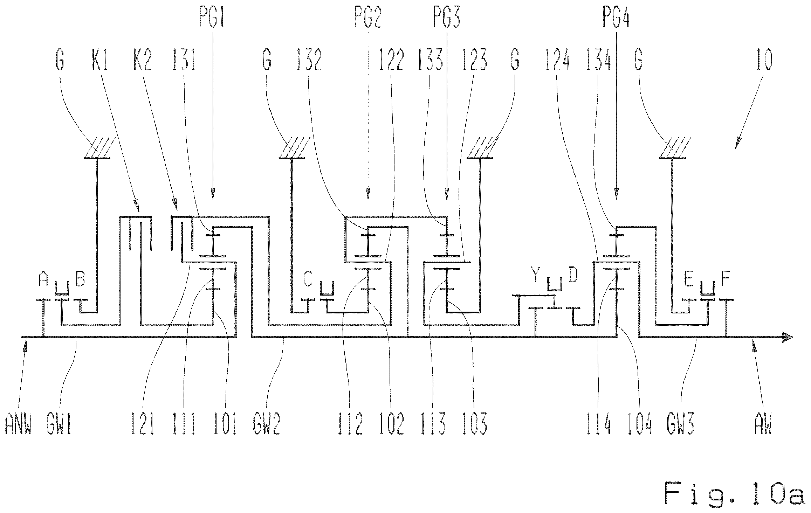

Fig. 10a zeigt ein Getriebe gemäß einer zehnten Ausführungsform der vorliegenden Erfindung.

In Fig. 10a ist eine Variante des Ausführungsbeispiels gemäß Fig. 9a gezeigt. Das Mehrstufengetriebe 1 entspricht in seinem Aufbau im Wesentlichen dem Getriebe gemäß Fig. 9a, so dass bezüglich des Aufbaus des Mehrstufengetriebes 1 auf die Beschreibung in Fig. 9a-9c und des Weiteren auf die dazu gehörende Beschreibung in den Fig. 1a-1c verwiesen wird.

Bei dem in Fig. 10a gezeigten Getriebe 1 handelt es sich um ein 8-Gang Getriebe mit zwei Overdrive-Gängen (2OD). Das Getriebe 1 unterscheidet sich dabei von dem in Fig. 9a gezeigten Getrieben, dass ein zusätzliches Schaltelement Y vorgesehen ist, welches mit dem vierten Schaltelement D in einem Doppelschaltelement Y/D zusammengefasst ist. Ist das Schaltelement Y betätigt oder geschlossen, so verbindet es den Steg 123 des dritten Planetenradsatz PG3 mit der zweiten Getriebewelle GW2 und dem mit der zweiten Getriebewelle GW2 drehfest verbundenen Sonnenrad 104 des vierten Planetenradsatzes PG4. Ist dagegen das vierte Schaltelement D betätigt oder geschlossen, so verbindet es den Steg 123 des dritten Planetenradsatz PG3 mit dem Steg 124 des vierten Planetenradsatz PG4.

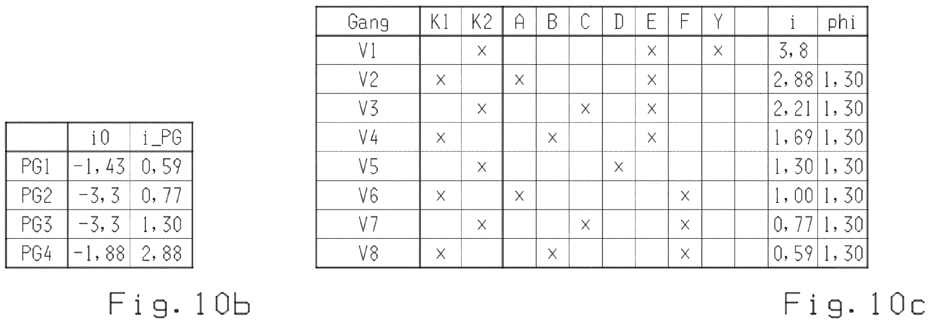

Gegenüber der Variante mit sieben Gängen, wird in Fig. 10a bei dem zweiten Teilgetriebe TG2 die Übersetzung aus dem ursprünglich 4. Vorwärtsgang, welcher den vierten Planetenradsatz PG4 umgeht, zusätzlich zusammen mit dem vierten Planetenradsatz PG4 genutzt. Das Schaltelement Y verbindet dabei, wie zuvor beschrieben, den Steg 123 des dritten Planetenradsatz PG3 mit dem Sonnenrad 104 des vierten Planetenradsatz PG4. Dadurch kann ein kurzer Gang als neuer 1. Vorwärtsgang dargestellt werden, wie auch aus der Schalttabelle in nachfolgender Fig. 10c entnommen werden kann.

Fig. 10b zeigt ein Übersetzungsschema für ein Getriebe gemäß Fig. 10a.

In Fig. 10b ist eine Schaltmatrix für ein Getriebe gemäß Fig. 10a gezeigt. In der in Fig. 10b gezeigten Schaltmatrix sind nur Kreuze für diejenigen der Schaltelemente, d.h. die Schaltelemente A-G sowie die Kupplungen K1 und K2, gesetzt, die für den jeweiligen der Vorwärtsgänge V1-V8 notwendig sind und in diesem Gang betätigt bzw. geschlossen werden. In der vorletzten Spalte der Schaltmatrix sind beispielhaft die Gangübersetzungen i der geschalteten Vorwärtsgänge V1-V8 angegeben. Außerdem ist in der letzten Spalte der Schaltmatrix das daraus resultierende Übersetzungsverhältnis phi des nächstniedrigeren Gangs zu dem betreffenden Vorwärtsgang V1-V8 angegeben.

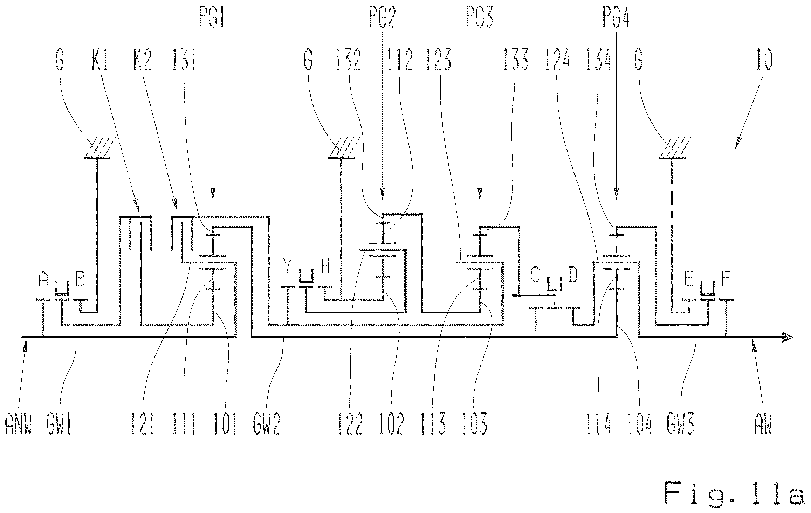

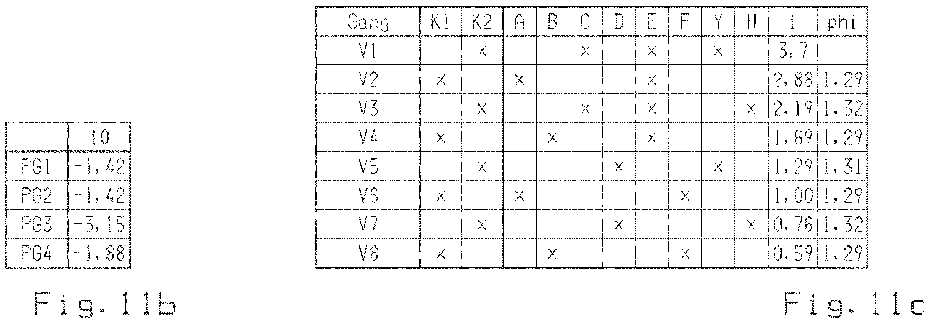

Fig. 11a zeigt ein Getriebe gemäß einer elften Ausführungsform der vorliegenden Erfindung.

In Fig. 11a ist eine Variante des Ausführungsbeispiels gemäß Fig. 10a gezeigt. Das Mehrstufengetriebe 10 entspricht in seinem Aufbau im Wesentlichen dem Getriebe gemäß Fig. 10a, so dass bezüglich des Aufbaus des Mehrstufengetriebes 10 auf die Beschreibung in Fig. 10a-10c und des Weiteren auf die dazu gehörende Beschreibung in den Fig. 1a-1c verwiesen wird.

Wie bei dem in Fig. 10a gezeigten Getriebe handelt es sich auch bei dem in Fig. 11a gezeigten Getriebe 10 um ein 8-Gang Getriebe mit zwei Overdrive-Gängen (2OD). Das Getriebe10 unterscheidet sich dabei von dem in Fig. 10a dargestellten Getriebe dadurch, dass ein zusätzliches Doppelschaltelement G/H vorgesehen ist, welches die Schaltelemente Y und H zusammenfasst. Des Weiteren sind das dritte und vierte Schaltelement C und D zu einem Doppelschaltelement C/D zusammengefasst.

Ist bei dem Doppelschaltelement Y/H das Schaltelement Y betätigt oder geschlossen, so verbindet es den Steg 123 des dritten Planetenradsatz PG3 mit dem Steg 122 des zweiten Planetenradsatz PG2. Ist dagegen das Schaltelement H betätigt oder geschlossen, so verbindet es den Steg 122 des zweiten Planetenradsatz PG2 mit dem gehäusefest angeordneten Sonnenrad 102 des zweiten Planetenradsatz PG2.

Ist bei dem Doppelschaltelement C/D das dritte Schaltelement C betätigt oder geschlossen, so verbindet es das Hohlrad 133 des dritten Planetenradsatz PG3 mit der zweiten Getriebewelle GW2 und das mit der zweiten Getriebewelle GW2 drehfest verbundene Sonnenrad 104 des vierten Planetenradsatzes PG4. Ist dagegen das vierte Schaltelement D betätigt oder geschlossen, so verbindet es das Hohlrad 133 des dritten Planetenradsatz PG3 mit dem Steg 124 des vierten Planetenradsatz PG4.

Die Variante des 8-GangGetriebes mit vier Doppelschaltelementen A/B, C/D, E/F und Y/H erlaubt weitere Verschaltungsvarianten für das zweite Teilgetriebe TG2. Der zweite und dritte Planetenradsatz PG2 und PG3 wirken derart zusammen, dass die Übersetzung k¹ und k⁻¹ durch die Schaltelemente Y und H schaltbar sind. Diese Übersetzungen können über den vierten Planetenradsatz PG4 wirken oder als Umgehungsgang zu dem vierten Planetenradsatz PG4 durch das dritte und vierte Schaltelement C und D.

Fig. 11b zeigt ein Übersetzungsschema für ein Getriebe gemäß Fig. 11a.

In Fig. 11b ist außerdem eine Schaltmatrix für ein Getriebe gemäß Fig. 11a gezeigt. In der in Fig. 11b gezeigten Schaltmatrix sind nur Kreuze für diejenigen der Schaltelemente, d.h. die Schaltelemente A-H sowie die Kupplungen K1 und K2, gesetzt, die für den jeweiligen der Vorwärtsgänge V1-V8 notwendig sind und in diesem Gang betätigt bzw. geschlossen werden. In der vorletzten Spalte der Schaltmatrix sind beispielhaft die Gangübersetzungen i der geschalteten Vorwärtsgänge V1-V8 angegeben. Außerdem ist in der letzten Spalte der Schaltmatrix das daraus resultierende Übersetzungsverhältnis phi des nächstniedrigeren Gangs zu dem betreffenden Vorwärtsgang V1-V8 angegeben.

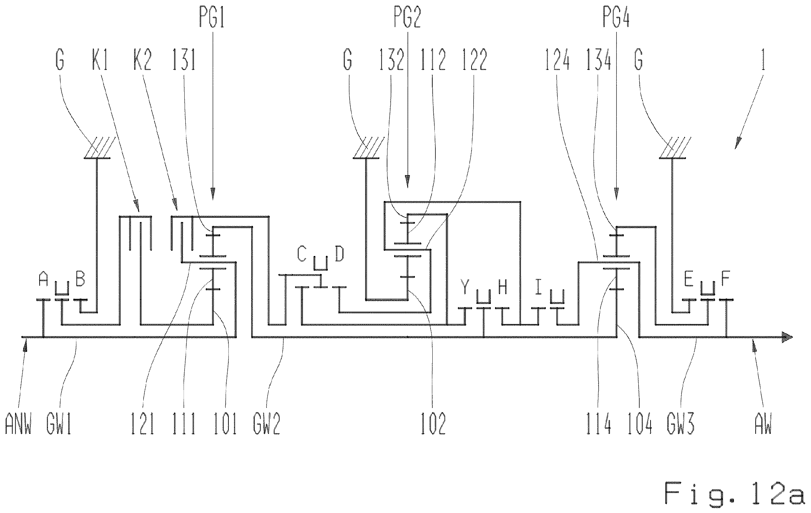

Fig. 12a zeigt ein Getriebe gemäß einer zwölften Ausführungsform der vorliegenden Erfindung.

Fig. 12a zeigt eine Variante eines Getriebes gemäß Fig. 10a. Das Mehrstufengetriebe 1 entspricht in seinem Aufbau im Wesentlichen dem Getriebe gemäß Fig. 10a, so dass bezüglich des Aufbaus des Mehrstufengetriebes 1 auf die Beschreibung in Fig. 10a-10c und des Weiteren auf die dazu gehörende Beschreibung in den Fig. 1a-1c verwiesen wird.

Bei dem in Fig. 12a dargestellten Getriebe handelt es ebenfalls um ein 8-Gang Getriebe umfassend zwei Overdrive-Gänge (2OD), wie bei den Getrieben gemäß Fig. 10a und 11a. Das Getriebe 1 gemäß Fig. 12a unterscheidet sich dabei von dem in Fig. 10a gezeigten Getriebe, dass statt vier nur drei Planentenradsätze PG1, PG2, PG4 vorgesehen sind. In dem Ausführungsbeispiel, wie es in Fig. 12a gezeigt ist, sind dies der erste, zweite und vierte Planentenradsatz PG1, PG2 und PG4. Des Weiteren sind das dritte und vierte Schaltelement C und D zu einem Doppelschaltelement zusammengefasst. Außerdem sind drei zusätzliche Schaltelemente Y, H und I vorgesehen, wobei die beiden Schaltelemente Y und H zu einem Doppelschaltelement Y/H zusammengefasst sind. Ist das dritte Schaltelement C geschlossen, so verbindet es die Kupplung K2 mit dem Hohlrad 132 des zweiten Planetenradsatz PG2. Ist dagegen das vierte Schaltelement D betätigt bzw. geschlossen, so wird die Kupplung K2 mit dem Steg 122 des zweiten Planetenradsatzes PG2 verbunden. Die Kupplung K2 ist wiederum mit der Antriebswelle ANW verbunden, wenn sie geschlossen bzw. betätigt ist. Ist das Schaltelement Y geschlossen, so verbindet es das Hohlrad 132 des zweiten Planetenradsatzes PG2 mit der zweiten Getriebewelle GW2 und dem mit der Getriebewelle GW2 drehfest verbundenen Sonnenrad 104 des vierten Planetenradsatzes PG4. Ist dagegen das Schaltelement H geschlossen, so verbindet es den Steg 122 des zweiten Planetenradsatzes PG2 mit der zweiten Getriebewelle GW2 und über diese mit dem Sonnenrad 104 des vierten Planetenradsatz PG4. Ist des Weiteren das Schaltelement I geschlossen, so verbindet es den Steg 122 des zweiten Planetenradsatzes PG2 mit dem Steg 124 des vierten Planetenradsatzes PG4.

Bei der in Fig. 12a gezeigten Variante eines 8-Gang Getriebes sind weitere Verschaltungsvarianten für das zweite Teilgetriebe TG2 möglich. Der zweite Planetenradsatz PG2 wird hierbei für beide benötigten Übersetzungen k¹ und k⁻¹ genutzt durch die Schaltelemente C, D, Y H und I. Die Übersetzung k¹ wird dadurch erzeugt, dass das Hohlrad 132 des zweiten Planetenradsatzes PG2 durch Schließen des dritten Schaltelements C angetrieben wird. Der Abtrieb erfolgt über den Steg 122 des zweiten Planetenradsatzes PG2. Das Sonnenrad 102 des zweiten Planetenradsatzes PG2 ist gehäusefest angeordnet. Die Übersetzung k⁻¹ wird wiederum dadurch erzeugt, dass der Steg 122 des zweiten Planetenradsatzes PG2 angetrieben wird, indem das vierte Schaltelement D geschlossen wird. Der Abtrieb erfolgt über das Hohlrad 132 des zweiten Planetenradsatzes PG2. Das Sonnenrad 102 des zweiten Planetenradsatzes PG2 ist gehäusefest angeordnet. Diese Übersetzungen können mittels der Schaltelemente Y und H über den vierten Planetenradsatz PG4 wirken oder als Umgehungsgang zu dem vierten Planetenradsatz PG4 mittels des Schaltelements I.

Der Vorteil des Ausführungsbeispiels in Fig. 12a ist, dass es einen Planentenradsatz weniger aufweist. Stattdessen sind mehrere Schaltelemente vorgesehen, wobei die Schaltelemente Y und H innenliegend angeordnet sind.

Als Lastschaltelement für das zweite Teilgetriebe TG2 kann anstelle der zweiten Kupplung K2, wie sie in Fig. 12a gezeigt ist, auch eine Bremse B2 (nicht dargestellt) für das Sonnenrad 102 des zweiten Planetenradsatz PG2 vorgesehen werden.

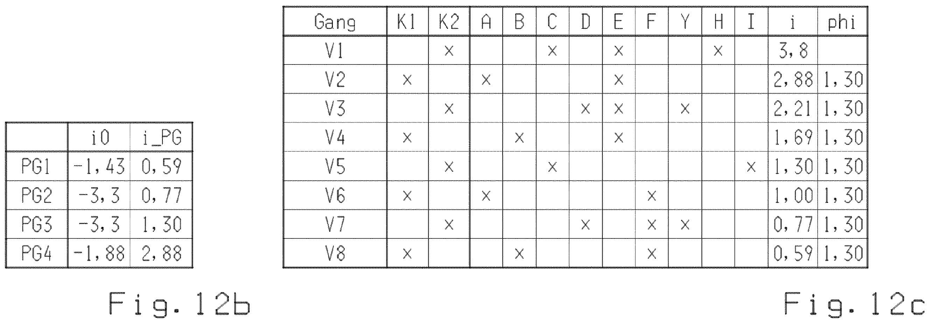

Bei einer nicht dargestellten Variante des Getriebes gemäß Fig. 12a wird das Schaltelement H für den 1. Vorwärtsgang weggelassen, so dass ein 7-Gang Getriebe entsteht. Das Schaltschema, wie es in nachfolgender Fig. 12c gezeigt ist, bleibt gleich, nur dass der 1. Vorwärtsgang fehlt. Die beiden Schaltelemente Y und I des Getriebes gemäß Fig. 12a können jeder mit einem eigenen Aktuator oder beispielsweise mit nur einem gemeinsamen Aktuator betätigt werden, da sie nie gleichzeitigt betätigt bzw. geschlossen werden.

Fig. 12b zeigt ein Übersetzungsschema für ein Getriebe gemäß Fig. 12a.

In Fig. 12b ist eine Schaltmatrix für ein Getriebe gemäß Fig. 12a gezeigt. In der in Fig. 12b gezeigten Schaltmatrix sind nur Kreuze für diejenigen der Schaltelemente, d.h. die Schaltelemente A-I sowie die beiden Kupplungen K1 und K2, gesetzt, die für den jeweiligen der Vorwärtsgänge 1-8 notwendig sind und in diesem Gang betätigt bzw. geschlossen werden. In der vorletzten Spalte der Schaltmatrix sind beispielhaft die Gangübersetzungen i der geschalteten Vorwärtsgänge V1-V8 angegeben. Außerdem ist in der letzten Spalte der Schaltmatrix das daraus resultierende Übersetzungsverhältnis phi des nächstniedrigeren Gangs zu dem betreffenden Vorwärtsgang V1-V8 angegeben.

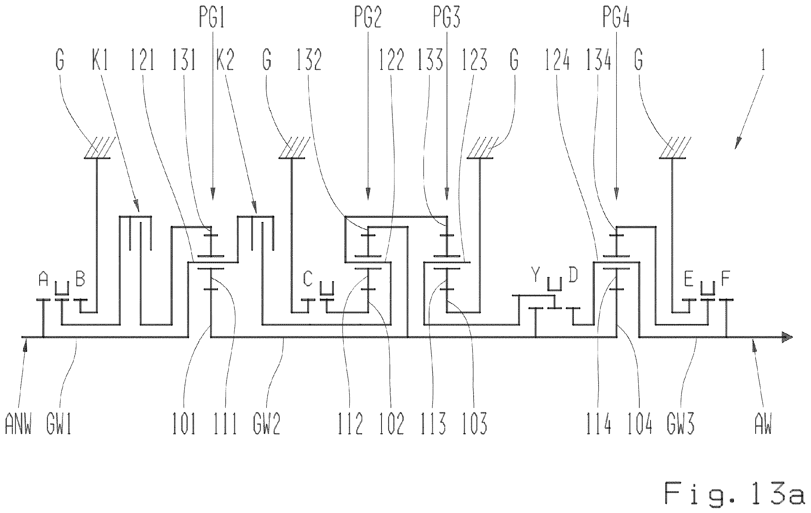

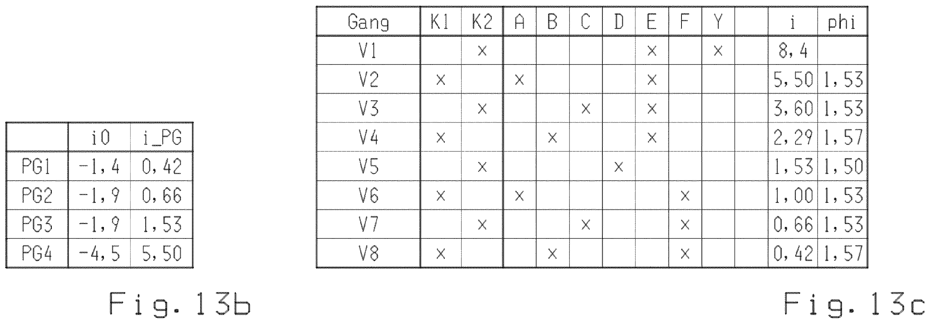

Fig. 13a zeigt ein Getriebe gemäß einer dreizehnten Ausführungsform der vorliegenden Erfindung.

In Fig. 13a ist eine Variante eines Getriebes gemäß Fig. 10a gezeigt. Das Mehrstufengetriebe 1 entspricht in seinem Aufbau im Wesentlichen dem Getriebe gemäß Fig. 10a, so dass bezüglich des Aufbaus des Mehrstufengetriebes 1 auf die Beschreibung in Fig. 10a-10c und des Weiteren auf die dazu gehörende Beschreibung in den Fig. 1a-1c verwiesen wird.

Das in der Fig. 13a dargestellte Getriebe 1 ist ebenfalls ein 8-Gang Getriebe, umfassend zwei Overdrive-Gänge (2OD), wie bei den Getrieben gemäß Fig. 10a, 11a und 12a. Das Getriebe 1 unterscheidet sich von dem in Fig. 10a gezeigten Getriebe dadurch, dass die zweite Kupplung K2, wenn sie betätigt bzw. geschlossen ist, den Steg 121 des ersten Planetenradsatzes PG1 mit dem Steg 122 des zweiten Planetenradsatzes PG2 verbindet. Die erste Kupplung K1 verbindet wiederum, wenn sie betätigt bzw. geschlossen ist, das Hohlrad 131 des ersten Planetenradsatzes PG1 mit dem ersten Doppelschaltelement A/B am Getriebeeingang.

Durch die Änderung der Anbindung des ersten Planetenradsatzes PG1 kann ein großer doppelter Gangsprung k⁻² erzeugt werden. Der Antrieb erfolgt dabei über den Steg 121 des ersten Planetenradsatzes PG1 und der Abtrieb über das Sonnenrad 101 des ersten Planetenradsatzes PG1. Das Hohlrad 131 des ersten Planetenradsatzes PG1 ist dann gehäusefest angeordnet, da es durch das zweite betätigte Schaltelement B mit dem Gehäuse G verbunden wird. Diese geänderte Anbindung des ersten Planetenradsatzes PG1 kann auch mit den hierin beschriebenen 7-Gang-Getriebe Varianten kombiniert werden.

Fig. 13b zeigt ein Übersetzungsschema für ein Getriebe gemäß Fig. 13a.

In Fig. 13b ist eine Schaltmatrix für ein Getriebe gemäß Fig. 13a gezeigt. In der in Fig. 13b gezeigten Schaltmatrix sind nur Kreuze für diejenigen der Schaltelemente, d.h. die Schaltelemente A-G sowie die Kupplungen K1 und K2, gesetzt, die für den jeweiligen der Vorwärtsgänge V1-V8 notwendig sind und in diesem Gang betätigt bzw. geschlossen werden. In der vorletzten Spalte der Schaltmatrix sind beispielhaft die Gangübersetzungen i der geschalteten Vorwärtsgänge V1-V8 angegeben. Außerdem ist in der letzten Spalte der Schaltmatrix das daraus resultierende Übersetzungsverhältnis phi des nächstniedrigeren Gangs zu dem betreffenden Vorwärtsgang V1-V8 angegeben.

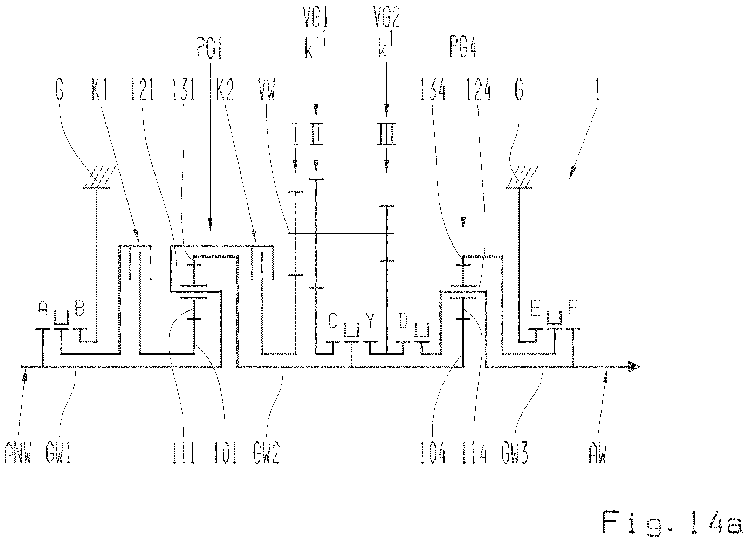

Fig. 14a zeigt ein Getriebe gemäß einer vierzehnten Ausführungsform der vorliegenden Erfindung.

In Fig. 14a ist noch eine weitere Variante eines Getriebes gemäß Fig. 10a dargestellt. Das Mehrstufengetriebe 1 entspricht in seinem Aufbau im Wesentlichen dem Getriebe gemäß Fig. 10a, so dass bezüglich des Aufbaus des Mehrstufengetriebes 1 auf die Beschreibung in Fig. 10a-10c und des Weiteren auf die dazu gehörende Beschreibung in den Fig. 1a-1c verwiesen wird.

Das in Fig. 14a dargestellten Getriebe 1 ist ebenfalls ein 8-Gang Getriebe umfassend zwei Overdrive-Gänge (2OD), wie bei den Getrieben gemäß der Fig. 10a bis 13a. Das Getriebe 1 unterscheidet sich von dem Getriebe gemäß Fig. 10a dadurch, dass nur zwei Planetenradsätze vorhanden sind, hier der erste und vierte Planetenradsatz PG1 und PG4. Der zweite und dritte Planetenradsatz PG2 und PG3 entfallen dagegen. Des Weiteren ist ein Vorgelegegetriebe vorgesehen mit einer Vorgelegewelle VW1 und drei Radebenen, insbesondere in Form von Stirnradstufen I, II, III.

Das Vorgelegegetriebe stellt eine Übersetzung von k⁻¹ und k¹ bereit. Die Getriebewellen GW1, GW2, GW3 sind selektiv über die Radebenen I, II und III und sieben Schaltelemente A, B, C, D, E, F und Y, sowie die Kupplungen K1 und K2 als weiteren Schaltelementen, miteinander in Triebverbindung bringbar. Die erste Radebene I wird, wenn die Kupplungen K1 und K2 und das erste Schaltelement A betätigt oder geschlossen sind, mit der Antriebswelle ANW bzw. der ersten Getriebewelle GW1 verbunden. Die zweite Radebene II kann durch Betätigen oder Schließen des dritten Schaltelements C mit der zweiten Getriebewelle GW2 und dem mit der zweiten Getriebewelle GW2 drehfest verbundenen Hohlrad 131 des ersten Planetenradsatzes PG1 verbunden werden. Ist wiederum das vierte Schaltelement D betätigt, so verbindet es die dritte Radebene III mit dem Steg 124 des vierten Planetenradsatzes PG4. Ist dagegen das Schaltelement Y betätigt, so verbindet es die dritte Radebene III mit der zweiten Getriebewelle GW2 und das mit ihr drehfest verbundene Sonnenrad 104 des vierten Planetenradsatzes PG4.

Das zweite Teilgetriebe TG2 wird in dem in Fig. 14a dargestellten Ausführungsbeispiel durch eine Vorgelegebauweise realisiert. Die zuvor durch den zweiten und dritten Planetenradsatz PG2 und PG3 bereitgestellten Übersetzungen von k⁻¹ und k¹ (jeweils ein einfacher Gangsprung) wird nun durch zwei Radebenen realisiert in Form des Vorgeleges. Der Vorteil ist, dass hierbei zwei Planetenradsätze, hier der zweite und dritte Planetenradsatz PG2 und PG3 entfallen. Des Weiteren können die Schaltelemente C, D und Y als konventionelle Schaltelemente ausgeführt werden. Das bedeutet, dass ein mittiges Getriebeelement mit einem linken oder rechten Nachbarn verbunden wird. Dadurch kann Bauraum eingespart werden.

Das Vorgelege VG kann auch in 2-Vorgelegewelle-Bauweise ausgeführt sein. In diesem Fall würde das Vorgelege-Getriebe VG in Fig. 14a entsprechend nach unten gespiegelt. Die Leistungsteilung ist ähnlich wie bei einem Planetengetriebe mit festgehaltenem Steg. Ein Vorteil liegt hierbei im Ausgleich der Radialkräfte auf der Hauptwelle.

Ein Rückwärtsgang (nicht dargestellt) kann bei dem Getriebe, wie es in Fig. 14a gezeigt ist, als zusätzliche Radebene mit Umkehr-Radebene hinzugefügt werden.

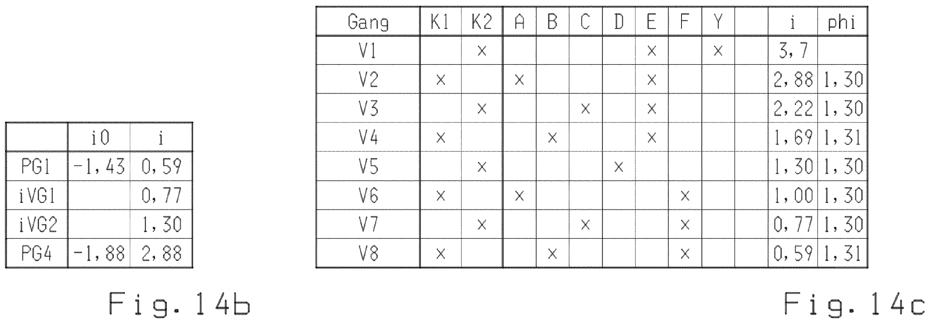

Fig. 14b zeigt ein Übersetzungsschema für ein Getriebe gemäß Fig. 14a.

Weiter ist in Fig. 14b beispielhaft eine Übersetzungstabelle für Übersetzungen der zwei Planetenradsätze PG1 und PG4 des Getriebes gemäß Fig. 14a dargestellt. Dabei ist eine jeweilige Standgetriebeübersetzung i0 für die Planetenradsätze PG1 und PG4 angegeben. Für das Vorgelegegetriebe ist des Weiteren die Übersetzung des Vorgelegegetriebes iVG1 und iVG2 angegeben.

Fig. 14c zeigt eine Schaltmatrix für ein Getriebe gemäß der Fig. 14a.

In Fig. 14c ist außerdem eine Schaltmatrix für ein Getriebe gemäß Fig. 14a gezeigt. In der in Fig. 14c gezeigten Schaltmatrix sind nur Kreuze für diejenigen der Schaltelemente, d.h. die Schaltelemente A-Y sowie die Kupplungen K1 und K2, gesetzt, die für den jeweiligen der Vorwärtsgänge V1-V8 notwendig sind und in diesem Gang betätigt bzw. geschlossen werden. In der vorletzten Spalte der Schaltmatrix sind beispielhaft die Gangübersetzungen i der geschalteten Vorwärtsgänge V1-V8 angegeben. Außerdem ist in der letzten Spalte der Schaltmatrix das daraus resultierende Übersetzungsverhältnis phi des nächstniedrigeren Gangs zu dem betreffenden Vorwärtsgang V1-V8 angegeben.

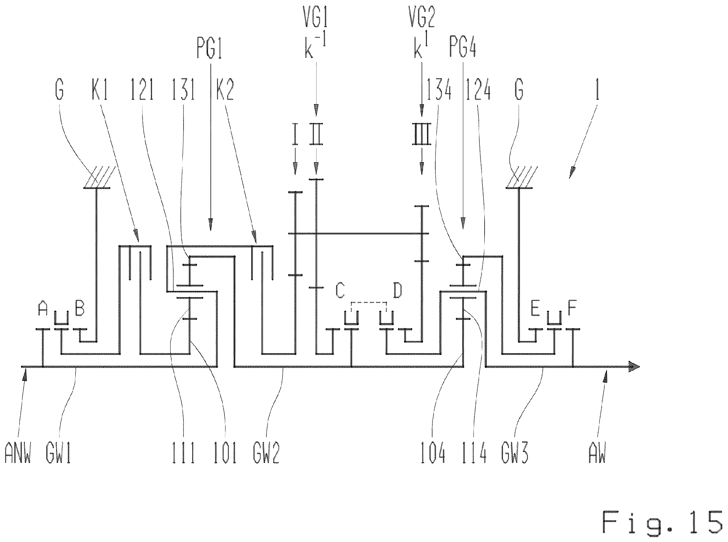

Fig. 15 zeigt ein Getriebe gemäß einer fünfzehnten Ausführungsform der vorliegenden Erfindung.

In Fig. 15 ist noch eine weitere Variante des Mehrstufengetriebes gemäß Fig. 1a dargestellt. Das Mehrstufengetriebe 1 entspricht in seinem Aufbau im Wesentlichen dem Getriebe gemäß Fig. 1a, so dass bezüglich des Aufbaus des Mehrstufengetriebes 1 auf die Beschreibung in den Fig. 1a-1c verwiesen wird.

Das in Fig. 15 dargestellte Getriebe 1 ist ein 7-Gang Getriebe umfasend zwei Over Drive-Gänge in Mischform, d.h. es weist eine Planeten- und Vorgelegebauweise auf. Das Getriebe 1 unterscheidet sich von dem Getriebe gemäß Fig. 1a dadurch, dass nur zwei Planetenradsätze vorhanden sind, hier der erste und vierte Planetenradsatz PG1 und PG4. Der zweite und dritte Planetenradsatz PG2 und PG3 entfallen dagegen. Stattdessen ist ein Vorgelegegetriebe vorgesehen mit einer Vorgelegewelle und drei Radebenen I, II, III.

Das Vorgelegegetriebe stellt eine Übersetzung von k⁻¹ und k¹ bereit. Die Getriebewellen GW1, GW2, GW3 sind selektiv über die Radebenen I, II, III und sechs Schaltelemente A, B, C, D, E und F, sowie die Kupplungen K1 und K2 als weiteren Schaltelementen, miteinander in Triebverbindung bringbar. Die erste Radebene I wird, wenn die Kupplungen K1 und K2 und das Schaltelement A betätigt oder geschlossen sind, mit der Antriebswelle ANW bzw. der ersten Getriebewelle GW1 verbunden. Die zweite Radebene II kann durch Betätigen oder Schließen des dritten Schaltelements C mit der zweiten Getriebewelle GW2 und dem mit der zweiten Getriebewelle GW2 drehfest verbundenen Hohlrad 131 des ersten Planetenradsatzes PG1 verbunden werden. Ist wiederum das vierte Schaltelement D betätigt, so verbindet es die dritte Radebene III mit dem Steg 124 des vierten Planetenradsatzes PG4.

Bei dem Getriebe 1 in Fig. 15 entsteht durch das Weglassen des Schaltelements Y für den 1. Vorwärtsgang eine 7-Gang Variante. Das Schaltschema bleibt gleich, nur dass der 1. Vorwärtsgang fehlt. Das dritte und vierte Schaltelement C und D können in diesem Fall beispielsweise nur mit einem Aktuator betätigt werden, da sie nie gleichzeitig geschlossen sind.

Bei dem in Fig.15 gezeigten Getriebe 1 kann, wenn es die Bindbarkeit zulässt, ein Minus-Planetenradsatz durch einen Plus-Planetenradsatz (nicht dargestellt) ersetzt werden, mit entsprechender Anbindung, d.h. Steg und Hohlrad werden vertauscht, um eine ähnliche gewünschte Übersetzung bereitzustellen.

In einer weiteren Variante des Getriebes gemäß Fig. 15, können die beiden Lastschaltelemente K1 und K2 bzw. B2 entfallen, wie bei der Variante mit dem automatisierten Schaltgetriebe in Fig. 7a. Dafür sind dann die Schaltelemente A/B und C/D als Lastschaltelemente für die Getriebe-Variante mit 7- Vorwärtsgängen umfassend 2 Overdrive-Gänge ausgeführt. Es entsteht dann ein Lastschaltgetriebe mit vier Lastschaltelementen und einer gemeinsam genutzten Planetenradsatz-Gruppe PG4, die mit formschlüssigen Schaltelementen E/F lastfrei vorgewählt werden kann.

Zusammenfassend bietet die vorliegende Erfindung unter anderem die Vorteile, dass das Getriebe kompakt baut. Darüber hinaus bietet das Getriebe eine gute Übersetzungsreihe, niedrige Trägheitsmassen sowie eine hohe Leistungsdichte. Weiter bietet die vorliegende Erfindung eine hohe Anzahl von Gängen.

**Bezugszeichen**

| | |
|---|---|
| 1, 10 | Getriebe |
| GW1, GW2, GW3, GW4 | Getriebewelle |
| ANW | Antriebswelle |
| AW | Abtriebswelle |
| G | Gehäuse |
| PG1, PG2, PG3, PG4, PG5, PG6 | Planetenradsatz |
| 101, 102, 103, 104, 105, 106 | Sonnenrad |
| 111, 112, 113, 114, 115, 116 | Planet |
| 121, 122, 123, 124, 125, 126 | Steg/Planetenträger |
| 131,132,133,134,135,136 | Hohlrad |
| I, II, III | Stirnradstufe |
| i0 | Standgetriebeübersetzung |
| i_PG | Übersetzung des Planetenradsatzes |
| iVG1, iVG2 | Übersetzung des Vorgelegegetriebes |
| k | Gangsprung |
| EM | elektrische Maschine |
| A, B, C, D, E, F, H, I, X, Y | Schaltelemente |
| B2 | Bremse |
| K1, K2, K0 | Kupplung |
| V1, V2, V3, V4, V5, V6, V7, V8, V9, | |
| V10, V11, V12, V13, V14 | Vorwärtsgang |
| R1, R2, R3, R4, R5, R6, R7 | Rückwärtsgang |

## Patentansprüche

1. Getriebe (1), insbesondere Mehrstufengetriebe, für ein Kraftfahrzeug, umfassend ein Gehäuse (G), eine Antriebswelle (ANW), eine Abtriebswelle (AW), zumindest zwei Planetenradsätze (PG1, PG4), wobei die Planentenradsätze (PG1, PG4) jeweils ein Sonnenrad (101, 104), zumindest einen Planeten (111,114), einen Steg (121, 124) und ein Hohlrad (131, 134) umfassen, sowie mehrere Schaltelemente (A, F), wobei der Steg (121) des ersten Planetenradsatzes (PG1) drehfest mit der Antriebswelle (GW1, ANW) verbunden ist,
und wobei das Hohlrad (134) des zweiten Planetenradsatzes (PG4) mittels eines ersten Schaltelementes (E) mit dem Gehäuse (G) verbindbar ist und mittels eines zweiten Schaltelementes (F) mit dem Steg (124) des zweiten Planetenradsatzes (PG4) verbindbar ist,
und wobei das Hohlrad (131) des ersten Planetenradsatzes (PG1) mit dem Sonnenrad (104) des zweiten Planetenradsatzes (PG4) drehfest verbunden ist und das Sonnenrad (101) des ersten Planetenradsatzes (PG1) durch wenigstens ein drittes Schaltelement (B, K1) mit dem Gehäuse (G) verbindbar ist,
und wobei die Mehrheit, insbesondere alle Schaltelemente (E, F, B, K1) von außen zugänglich in dem Gehäuse (G) angeordnet sind, **dadurch gekennzeichnet, dass** das Getriebe wenigstens einen weiteren Planetenradsatz (PG2, PG3, PG5, PG6) aufweist, wobei wenigstens zwei der Planetenradsätze (PG1, PG2) hintereinander im Getriebe (1) und/oder wenigstens zwei der Planetenradsätze (PG3, PG4; PG5, PG6) ineinander geschachtelt angeordnet sind,
wobei ein dritter Planetenradsatz (PG2) zwischen dem ersten und zweiten Planetenradsatz (PG1, PG4) oder zwischen dem ersten und einem vierten Planetenradsatz (PG1, PG3) angeordnet ist, wobei ein Sonnenrad (102) des dritten Planetenradsatzes (PG2) mit dem Gehäuse (G) verbunden oder mittels eines vierten Schaltelementes (B2, C) mit dem Gehäuse (G) verbindbar ist.

2. Getriebe gemäß Anspruch 1, **dadurch gekennzeichnet, dass** ein viertes Schaltelement (B2, C) ein reibschlüssiges Schaltelement, insbesondere eine Bremse (B2), oder ein formschlüssiges Schaltelement (C) ist.

3. Getriebe gemäß einem der Ansprüche 1 oder 2, **dadurch gekennzeichnet, dass** ein Steg (122) des dritten Planetenradsatzes (PG2) mit dem Steg (121) des ersten Planetenradsatzes (PG1) drehfest verbunden ist oder durch wenigstens ein Schaltelement (K2, X, Y, D), mit dem Steg (121) des ersten Planetenradsatzes (PG1) verbindbar ist.

4. Getriebe gemäß Anspruch 3, **dadurch gekennzeichnet, dass** eine elektrische Maschine (EM) angeordnet ist.

5. Getriebe gemäß einem der Ansprüche 1 bis 4, **dadurch gekennzeichnet, dass** ein Sonnenrad (103) des vierten Planetenradsatzes (PG3) mit dem Gehäuse (G) gehäusefest verbunden oder durch ein Schaltelement (K, D, C) mit dem Gehäuse (G) gehäusefest verbindbar ist.

6. Getriebe gemäß einem der Ansprüche 1 bis 5, **dadurch gekennzeichnet, dass** ein Sonnenrad (103) des vierten Planetenradsatzes (PG3) mit einem Schaltelement (J) mit einem Hohlrad (133) des vierten Planetenradsatzes (PG3) verbindbar ist.

7. Getriebe gemäß einem der Ansprüche 1 bis 4, **dadurch gekennzeichnet, dass** ein Sonnenrad (103) des vierten Planetenradsatzes (PG3) mit einem Hohlrad (132) des dritten Planetenradsatzes (PG2) drehfest verbunden ist.

8. Getriebe gemäß einem der Ansprüche 1 bis 6, **dadurch gekennzeichnet, dass** ein Steg (123) des vierten Planetenradsatzes (PG3) mit dem Steg (124) des zweiten Planetenradsatzes (PG4) drehfest verbunden ist oder mittels eines Schaltelementes (D) mit dem Steg (124) des zweiten Planetenradsatzes (PG4) verbindbar ist und mittels eines Schaltelementes (K2) mit dem Steg (121) des ersten Planetenradsatzes (PG1) verbindbar ist.

9. Getriebe gemäß einem der Ansprüche 1 bis 5 oder 8, **dadurch gekennzeichnet, dass** der fünfte Planetenradsatz (PG5) und der sechste Planetenradsatz (PG6) geschachtelt angeordnet sind und eine Rückwärtsgang-Gruppe zum Bereitstellen zumindest eines Rückwärtsganges (R1, R2, R3, R4, R5, R6, R7) bilden, wobei die Rückwärtsgang-Gruppe am Ausgang des Getriebes (1) angeordnet ist und wobei ein Sonnenrad (105) des fünften Planetenradsatzes (PG5) mit dem Steg (124) des zweiten Planetenradsatzes (PG4) drehfest verbunden ist, und ein Steg (125) des fünften Planetenradsatzes (PG5) mittels eines Schaltelementes (R) für einen Rückwärtsgang mit dem Gehäuse (G) gehäusefest verbindbar ist und wobei ein Sonnenrad (106) des sechsten Planetenradsatzes (PG6) mittels eines Schaltelementes (L) mit dem Gehäuse (G) gehäusefest verbindbar ist und mittels eines Schaltelementes (H) mit dem Steg (125) des fünften Planetenradsatzes (PG5) verbindbar ist.

10. Getriebe gemäß einem der Ansprüche 1 bis 9, **dadurch gekennzeichnet, dass** der erste Planetenradsatz (PG1) und der zweite Planetenradsatz (PG4) ein erstes Teilgetriebe (TG1) bilden und dass der zweite Planetenradsatz (PG4) zusammen mit einem dritten Planetenradsatz (PG2) und dem vierten Planetenradsatz (PG3) ein zweites Teilgetriebe (TG2) bildet.

11. Getriebe gemäß einem der Ansprüche 1 bis 10, **dadurch gekennzeichnet, dass** eine Trennkupplung (K0) als Anfahrkupplung vorgesehen ist, welche einen Antriebsmotor mit der Getriebewelle (GW1) am Eingang des Getriebes (1) verbindet.

12. Getriebe gemäß einem der Ansprüche 1 bis 11, **dadurch gekennzeichnet, dass** mittels mindestens neun Schaltelementen (A, B, C, D, E, C, R, H, L) und mindestens zwei Lastschaltelementen (K1, B2) sowie sechs Planetenradsätzen (PG1, PG2, PG3, PG4, PG5, PG6) mindestens 14 Vorwärtsgänge (V1-V14) und mindestens sieben Rückwärtsgänge (R1-R7) darstellbar sind.

13. Kraftfahrzeug, insbesondere ein Personen- oder ein Lastkraftwagen, mit einem Getriebe (1) gemäß einem der Ansprüche 1 bis 12.

## Claims

1. Transmission (1), in particular multi-step transmission, for a motor vehicle, comprising a housing (G), a drive shaft (ANW), an output shaft (AW), at least two planetary gear sets (PG1, PG4), the planetary gear sets (PG1, PG4) in each case comprising a sun gear (101, 104), at least one planet (111, 114), a spider (121, 124) and an internal gear (131, 134), and also comprising a plurality of shifting elements (A, F), the spider (121) of the first planetary gear set (PG1) being connected fixedly to the drive shaft (GW1, ANW) so as to rotate with it,
and it being possible for the internal gear (134) of the second planetary gear set (PG4) to be connected to the housing (G) by means of a first shifting element (E) and to be connected to the spider (124) of the second planetary gear set (PG4) by means of a second shifting element (F),
and the internal gear (131) of the first planetary gear set (PG1) being connected fixedly to the sun gear (104) of the second planetary gear set (PG4) so as to rotate with it, and it being possible for the sun gear (101) of the first planetary gear set (PG1) to be connected to the housing (G) by way of at least one third shifting element (B, K1),
and the majority of, in particular all, shifting elements (E, F, B, K1) being arranged in the housing (G) such that they are accessible from the outside,
**characterized in that** the transmission has at least one further planetary gear set (PG2, PG3, PG5, PG6), at least two of the planetary gear sets (PG1, PG2) being arranged behind one another in the transmission (1) and/or at least two of the planetary gear sets (PG3, PG4; PG5, PG6) being arranged such that they are nested inside one another, a third planetary gear set (PG2) being arranged between the first and second planetary gear set (PG1, PG4) or between the first and a fourth planetary gear set (PG1, PG3), a sun gear (102) of the third planetary gear set (PG2) being connected to the housing (G), or it being possible for a sun gear (102) of the third planetary gear set (PG2) to be connected to the housing (G) by means of a fourth shifting element (B2, C).

2. Transmission according to Claim 1, **characterized in that** a fourth shifting element (B2, C) is a frictionally locking shifting element, in particular a brake (B2), or a positively locking shifting element (C).

3. Transmission according to either of Claims 1 and 2, **characterized in that** a spider (122) of the third planetary gear set (PG2) is connected fixedly to the spider (121) of the first planetary gear set (PG1) so as to rotate with it, or can be connected to the spider (121) of the first planetary gear set (PG1) by way of at least one shifting element (K2, X, Y, D).

4. Transmission according to Claim 3, **characterized in that** an electric machine (EM) is arranged.

5. Transmission according to one of Claims 1 to 4, **characterized in that** a sun gear (103) of the fourth planetary gear set (PG3) is connected fixedly to the housing (G) or can be connected fixedly to the housing (G) by way of a shifting element (K, D, C).

6. Transmission according to one of Claims 1 to 5, **characterized in that** a sun gear (103) of the fourth planetary gear set (PG3) can be connected by way of a shifting element (J) to an internal gear (133) of the fourth planetary gear set (PG3).

7. Transmission according to one of Claims 1 to 4, **characterized in that** a sun gear (103) of the fourth planetary gear set (PG3) is connected fixedly to an internal gear (132) of the third planetary gear set (PG2) so as to rotate with it.

8. Transmission according to one of Claims 1 to 6, **characterized in that** a spider (123) of the fourth planetary gear set (PG3) is connected fixedly to the spider (124) of the second planetary gear set (PG4) so as to rotate with it, or can be connected by means of a shifting element (D) to the spider (124) of the second planetary gear set (PG4) and can be connected by means of a shifting element (K2) to the spider (121) of the first planetary gear set (PG1).

9. Transmission according to one of Claims 1 to 5 or 8, **characterized in that** the fifth planetary gear set (PG5) and the sixth planetary gear set (PG6) are arranged in a nested manner and form a reverse gear group for providing at least one reverse gear (R1, R2, R3, R4, R5, R6, R7), the reverse gear group being arranged at the output of the transmission (1), and a sun gear (105) of the fifth planetary gear set (PG5) being connected fixedly to the spider (124) of the second planetary gear set (PG4) so as to rotate with it, and it being possible for a spider (125) of the fifth planetary gear set (PG5) to be connected fixedly to the housing (G) by means of a shifting element (R) for a reverse gear, and it being possible for a sun gear (106) of the sixth planetary gear set (PG6) to be connected fixedly to the housing (G) by means of a shifting element (L) and to be connected to the spider (125) of the fifth planetary gear set (PG5) by means of a shifting element (H).

10. Transmission according to one of Claims 1 to 9, **characterized in that** the first planetary gear set (PG1) and the second planetary gear set (PG4) form a first component transmission (TG1), and **in that**, together with a third planetary gear set (PG2) and the fourth planetary gear set (PG3), the second planetary gear set (PG4) forms a second component transmission (TG2).

11. Transmission according to one of Claims 1 to 10, **characterized in that** a separating clutch (K0) is provided as a start-up clutch which connects a drive motor to the transmission shaft (GW1) at the input of the transmission (1).

12. Transmission according to one of Claims 1 to 11, **characterized in that** at least 14 forward gears (V1-V14) and at least seven reverse gears (R1-R7) can be produced by means of at least nine shifting elements (A, B, C, D, E, C, R, H, L), at least two power-shift elements (K1, B2) and six planetary gear sets (PG1, PG2, PG3, PG4, PG5, PG6) .

13. Motor vehicle, in particular a passenger car or a lorry, having a transmission (1) according to one of Claims 1 to 12.

## Revendications

1. Boîte de vitesses (1), en particulier boîte de vitesses à étages multiples pour un véhicule automobile, comprenant un boîtier (G), un arbre d'entraînement (ANW), un arbre de prise de force (AW), au moins deux trains planétaires (PG1, PG4), les trains planétaires (PG1, PG4) comprenant chacun une roue solaire (101, 104), au moins un satellite (111, 114), un porte-satellites (121, 124) et une couronne dentée (131, 134), ainsi que plusieurs éléments de commutation (A, F),
le porte-satellites (121) du premier train planétaire (PG1) étant connecté de manière solidaire en rotation à l'arbre d'entraînement (GW1, ANW),
et la couronne dentée (134) du deuxième train planétaire (PG4) pouvant être connectée au moyen d'un premier élément de commutation (E) au boîtier (G) et pouvant être connectée au moyen d'un deuxième élément de commutation (F) au porte-satellites (124) du deuxième train planétaire (PG4),
et la couronne dentée (131) du premier train planétaire (PG1) étant connectée de manière solidaire en rotation à la roue solaire (104) du deuxième train planétaire (PG4) et la roue solaire (101) du premier train planétaire (PG1) pouvant être connectée au boîtier (G) par au moins un troisième élément de commutation (B, K1),
et la majorité, en particulier la totalité des éléments de commutation (E, F, B, K1) étant disposés de manière accessible depuis l'extérieur dans le boîtier (G),
**caractérisée en ce que** la boîte de vitesses présente au moins un train planétaire supplémentaire (PG2, PG3, PG5, PG6), au moins deux des trains planétaires (PG1, PG2) étant disposés l'un derrière l'autre dans la boîte de vitesses (1) et/ou au moins deux des trains planétaires (PG3, PG4 ; PG5, PG6) étant disposés de manière emboîtée l'un dans l'autre,
un troisième train planétaire (PG2) étant disposé entre le premier et le deuxième train planétaire (PG1, PG4) ou entre le premier et un quatrième train planétaire (PG1, PG3), une roue solaire (102) du troisième train planétaire (PG2) étant connectée au boîtier (G) ou pouvant être connectée au boîtier (G) au moyen d'un quatrième élément de commutation (B2, C).

2. Boîte de vitesses selon la revendication 1, **caractérisée en ce qu'**un quatrième élément de commutation (B2, C) est un élément de commutation à engagement par friction, en particulier un frein (B2) ou un élément de commutation à engagement par correspondance de formes (C).

3. Boîte de vitesses selon l'une des revendications 1 ou 2, **caractérisée en ce qu'**un porte-satellites (122) du troisième train planétaire (PG2) est connecté de manière solidaire en rotation au porte-satellites (121) du premier train planétaire (PG1) ou peut être connecté par au moins un élément de commutation (K2, X, Y, D), au porte-satellites (121) du premier train planétaire (PG1).

4. Boîte de vitesses selon la revendication 3, **caractérisée en ce qu'**une machine électrique (EM) est prévue.

5. Boîte de vitesses selon l'une des revendications 1 à 4, **caractérisée en ce qu'**une roue solaire (103) du quatrième train planétaire (PG3) est connectée au boîtier (G) de manière fixée au boîtier ou peut être connectée au boîtier (G) de manière fixée au boîtier par un élément de commutation (K, D, C).

6. Boîte de vitesses selon l'une des revendications 1 à 5, **caractérisée en ce qu'**une roue solaire (103) du quatrième train planétaire (PG3) peut être connectée par un élément de commutation (J) à une couronne dentée (133) du quatrième train planétaire (PG3).

7. Boîte de vitesses selon l'une quelconque des revendications 1 à 4, **caractérisée en ce qu'**une roue solaire (103) du quatrième train planétaire (PG3) est connectée de manière solidaire en rotation à une couronne dentée (132) du troisième train planétaire (PG2).

8. Boîte de vitesses selon l'une quelconque des revendications 1 à 6, **caractérisée en ce qu'**un porte-satellites (123) du quatrième train planétaire (PG3) est connecté de manière solidaire en rotation au porte-satellites (124) du deuxième train planétaire (PG4) ou peut être connecté au moyen d'un élément de commutation (D) au porte-satellites (124) du deuxième train planétaire (PG4) et peut être connecté au moyen d'un élément de commutation (K2) au porte-satellites (121) du premier train planétaire (PG1).

9. Boîte de vitesses selon l'une des revendications 1 à 5 ou 8, **caractérisée en ce que** le cinquième train planétaire (PG5) et le sixième train planétaire (PG6) sont disposés de manière emboîtée et forment un groupe de rapports de marche arrière pour fournir au moins un rapport de marche arrière (R1, R2, R3, R4, R5, R6, R7), le groupe de rapports de marche arrière étant disposé à la sortie de la boîte de vitesses (1) et une roue solaire (105) du cinquième train planétaire (PG5) étant connectée de manière solidaire en rotation au porte-satellites (124) du deuxième train planétaire (PG4) et un porte-satellites (125) du cinquième train planétaire (PG5) pouvant être connecté au boîtier (G) de manière fixée au boîtier au moyen d'un élément de commutation (R) pour un rapport de marche arrière et une roue solaire (106) du sixième train planétaire (PG6) pouvant être connectée au boîtier (G) de manière fixée au boîtier au moyen d'un élément de commutation (L) et pouvant être connectée au moyen d'un élément de commutation (H) au porte-satellites (125) du cinquième train planétaire (PG5).

10. Boîte de vitesses selon l'une des revendications 1 à 9, **caractérisée en ce que** le premier train planétaire (PG1) et le deuxième train planétaire (PG4) forment une première boîte de vitesses partielle (TG1) et **en ce que** le deuxième train planétaire (PG4) forme, conjointement avec un troisième train planétaire (PG2) et le quatrième train planétaire (PG3), une deuxième boîte de vitesses partielle (TG2).

11. Boîte de vitesses selon l'une des revendications 1 à 10, **caractérisée en ce qu'**un embrayage de séparation (K0) est prévu sous forme d'embrayage de démarrage qui relie un moteur d'entraînement à l'arbre de boîte de vitesses (GW1) à l'entrée de la boîte de vitesses (1).

12. Boîte de vitesses selon l'une des revendications 1 à 11, **caractérisée en ce qu'**au moyen d'au moins neuf éléments de commutation (A, B, C, D, E, C, R, H, L) et d'au moins deux éléments de commutation de charge (K1, B2) ainsi que de six trains planétaires (PG1, PG2, PG3, PG4, PG5, PG6), il est possible de réaliser au moins 14 rapports de marche avant (V1-V14) et au moins sept rapports de marche arrière (R1-R7).

13. Véhicule automobile, en particulier voiture automobile ou poids-lourds, comprenant une boîte de vitesses (1) selon l'une des revendications 1 à 12.
